(19) **Europäisches Patentamt / European Patent Office / Office européen des brevets**

(11) **EP 0 941 918 B1**

(12) **EUROPEAN PATENT SPECIFICATION**

(45) Date of publication and mention
of the grant of the patent:
**11.04.2007 Bulletin 2007/15**

(51) Int Cl.:
**B62M 23/02** (2006.01)

(21) Application number: **99103193.1**

(22) Date of filing: **18.02.1999**

(54) **Pedal depression force detecting device and method for bicycle**

Pedalkraftdetektor für Fahrrad und Verfahren

Détecteur pour la force de pédale de bicyclettes et procédé

(84) Designated Contracting States:
**DE ES FR IT NL**

(30) Priority: **11.03.1998 JP 7828998**
**11.03.1998 JP 7829198**

(43) Date of publication of application:
**15.09.1999 Bulletin 1999/37**

(73) Proprietor: **HONDA GIKEN KOGYO KABUSHIKI KAISHA**
**Tokyo (JP)**

(72) Inventors:
• **Honda, Satoshi**
**4-1, Chuo 1-chome,**
**Wako-shi,**
**Saitama (JP)**

• **Miura, Nobuo**
**4-1, Chuo 1-chome,**
**Wako-shi,**
**Saitama (JP)**
• **Miura, Seishi**
**4-1, Chuo 1-chome,**
**Wako-shi,**
**Saitama (JP)**

(74) Representative: **Liska, Horst et al**
**Weickmann & Weickmann**
**Patentanwälte**
**Postfach 86 08 20**
**81635 München (DE)**

(56) References cited:
**DE-A- 2 228 041**     **DE-A- 4 027 365**
**DE-A- 19 609 981**     **DE-C- 19 617 959**
**GB-A- 2 107 880**

**Description**

The present invention relates to a pedal depression force detecting device and method for a bicycle, and more particularly to a pedal depression force detecting device and method for a bicycle which can accurately detect a pedal depression force irrespective of misalignment between a pair of rotating members for detecting the pedal depression force, and even if an initial deviation between the pair of rotating members for detecting the pedal depression force in their rotating direction is large upon mounting the rotating member.

Various inventions relating to a motor-assisted bicycle have been made in the prior art. A pedal depression force detecting device according to the preamble of claim 1 and a method according to the preamble of claim 2 are known from DE-A-196 17 959. Moreover, in Japanese Patent Laid-open No. Hei 9-290795, for example, a manual drive system and an electrical drive system are provided in parallel, and an output from the electrical drive system is controlled according to a change in the manual drive system, thereby moderating a change in motor drive force due to a rapid change in manual drive torque and reducing a shock due to such a change in motor drive force. Accordingly, a ride comfort on the motor-assisted bicycle can be improved.

The above prior art includes manual drive torque detecting means having the following configuration. A pair of rotating members for transmitting rotation through an elastic member to the manual drive system are provided, and permanent magnets are fixed to each of the rotating members so as to be arranged at given angular intervals. A sensor (e.g., Hall sensor) is fixed to a vehicle body of the bicycle, so as to detect the permanent magnets passing therenear. According to this manual drive torque detecting means, a simple structure and a compact size thereof can be realized.

In the above manual drive torque detecting means, however, if the pair of rotating members are misaligned with each other, the manual drive torque cannot be accurately detected. And if an initial phase difference between the pair of rotating members in their rotating direction is large upon mounting the rotating members, there is a possibility that when a large manual torque is input, a large phase difference not less than a period of pulses generated from the sensor may be generated, so that the phase difference between the pair of rotating members cannot be accurately obtained. As a result, a high accuracy of mounting of the pair of rotating members is required, and a high structural accuracy of the rotating members is also required. Accordingly, time and labor required for mounting of the rotating members are increased to cause a cost increase.

It is accordingly an object of the present invention to provide a pedal depression force detecting device and method for a bicycle which can accurately detect a pedal depression force irrespective of misalignment between the pair of rotating members for detecting the pedal depression force.
It is accordingly an object of the present invention to provide a pedal depression force detecting method for a bicycle which can accurately detect a phase difference between a pair of rotating members for detecting a pedal depression force during running of the bicycle irrespective of a large initial phase difference between the rotating members, thereby accurately detecting the pedal depression force. It is another object of the present invention to provide a pedal depression force detecting method for a bicycle which can provide an inexpensive pedal depression force detecting mechanism without requiring a high accuracy of mounting of the rotating members.

These objects have been solved by a pedal depression force detecting device or method as defined in claims 1 to 4.

BRIEF DESCRIPTION OF THE DRAWINGS:

FIG. 1 is a side view of a motor-assisted bicycle according to a preferred embodiment of the present invention.

FIG. 2 is an enlarged view of an essential part of FIG. 1.

FIG. 3 is a cross section taken along the line 3-3 in FIG. 2.

FIG. 4 is an enlarged view of an essential part of FIG. 3.

FIG. 5 is a cross section taken along the line 5-5 in FIG. 4.

FIG. 6 is a cross section taken along the line 6-6 in FIG. 4.

FIG. 7 is an enlarged cross section taken along the line 7-7 in FIG. 2.

FIG. 8 is a cross section taken along the line 8-8 in FIG. 4.

FIG. 9 is a cross section taken along the line 9-9 in FIG. 4.

FIG. 10 is a schematic view showing a relative positional relation between first sensors and magnetic poles of a first magnetic ring.

FIG. 11 is a schematic view for illustrating detection patterns by the first sensors in association with changes in circumferential relative position of the first magnetic ring.

FIG. 12 is a flowchart showing a control routine for an electric motor to be executed in a control unit.

FIG. 13 is a schematic view for illustrating detection patterns by the first and second sensors in association with relative rotation of the first and second magnetic rings.

FIGS. 14(a) and 14(b) are time charts for illustrating detection of a phase difference in a normal running condition of the bicycle.

FIGS. 15(a) to 15(d) are schematic views showing typical rotational conditions of the first and second magnetic rings in the case that they are misaligned with each other.

FIGS. 16(a) to 16(c) are time charts for illustrating detection of phase differences in the running condition shown in FIGS. 15(a) to 15(d).

FIG. 17 is a perspective view showing a positional relation between the first and second magnetic rings and first to fourth sensors according to the present invention.

FIGS. 18(a) to 18(d) are schematic views showing rotational conditions of the first and second magnetic rings in relation to the first to fourth sensors in the case that the first and second magnetic rings are misaligned with each other.

FIGS. 19(a) to 19(d) are time charts for illustrating detection of phase differences in the running condition shown in FIGS. 18(a) to 18(d).

FIG. 20 is a flowchart showing a control routine for the electric motor to be executed in the control unit according to the present invention.

FIGS. 21(a) to 21(d) are time charts for illustrating detection of the phase difference between the first and second magnetic rings during running of the bicycle in the case that the initial phase difference between the two magnetic rings is large.

FIG. 22 is a flowchart showing a control routine for the electric motor to be executed in the control unit according to the present invention.

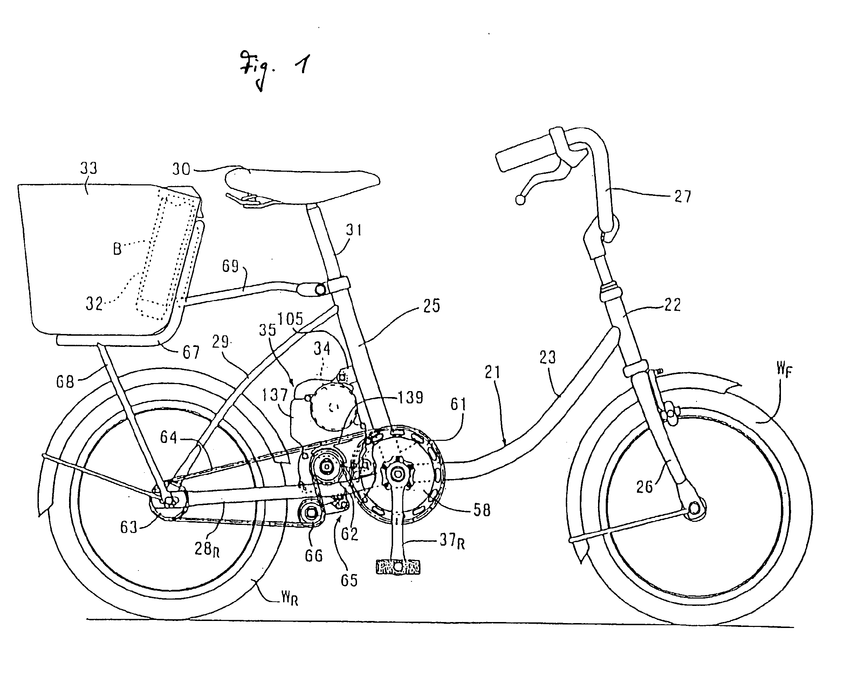

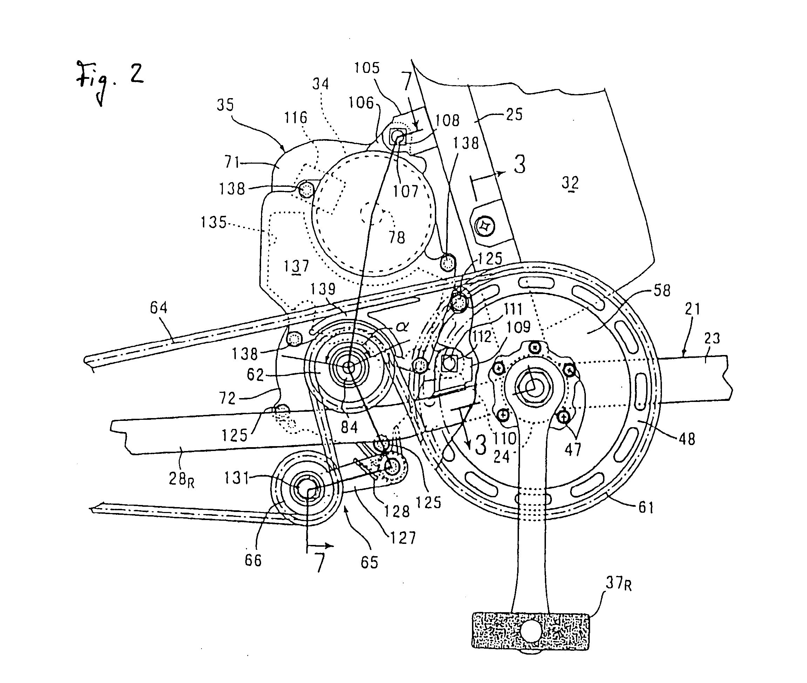

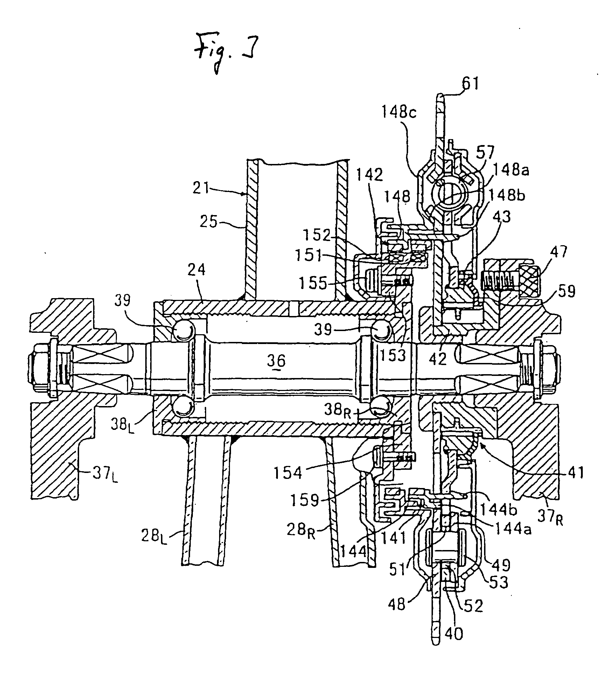

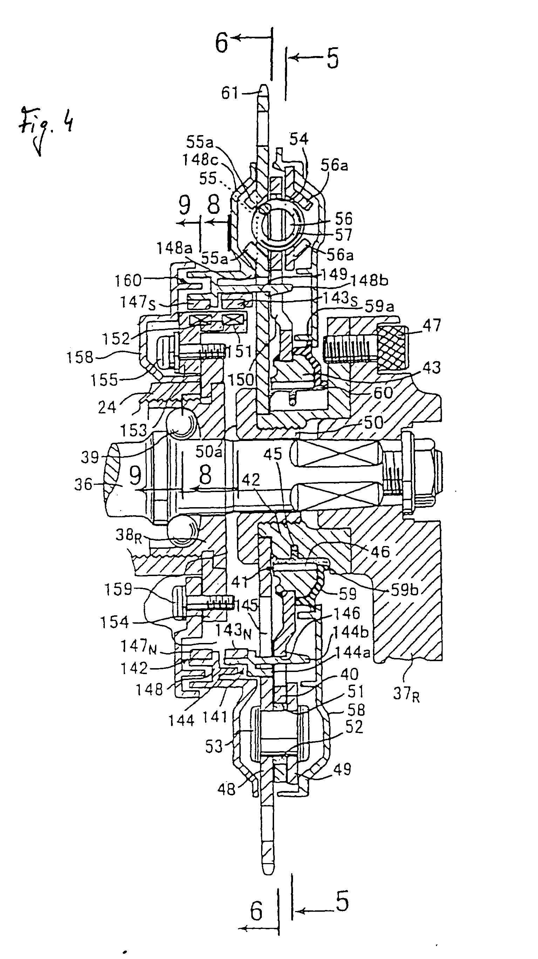

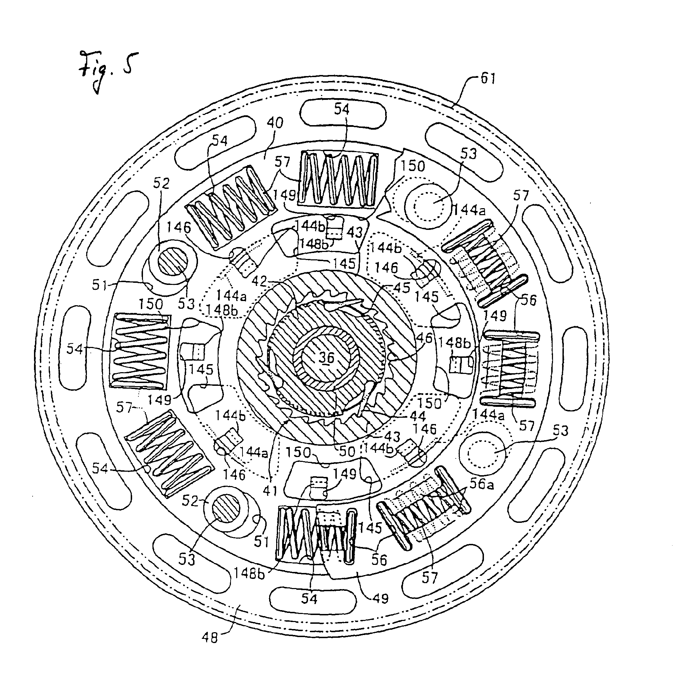

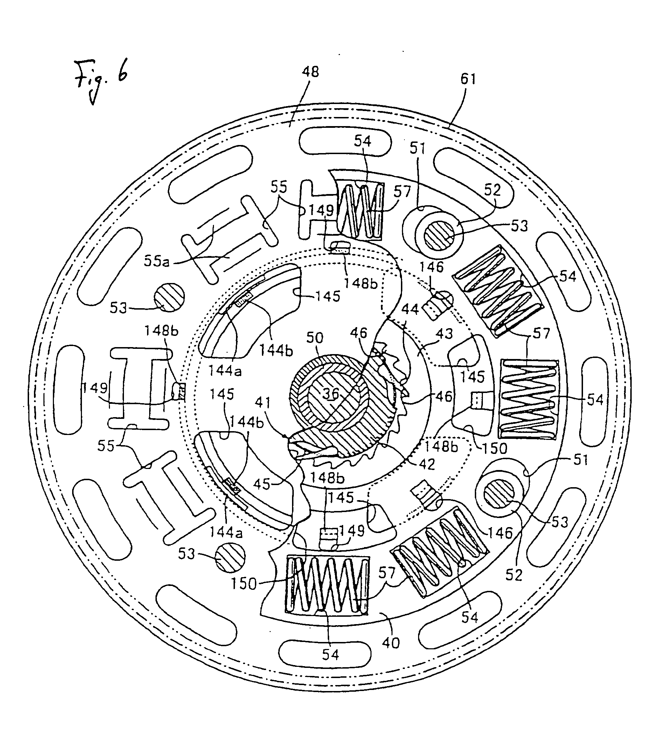

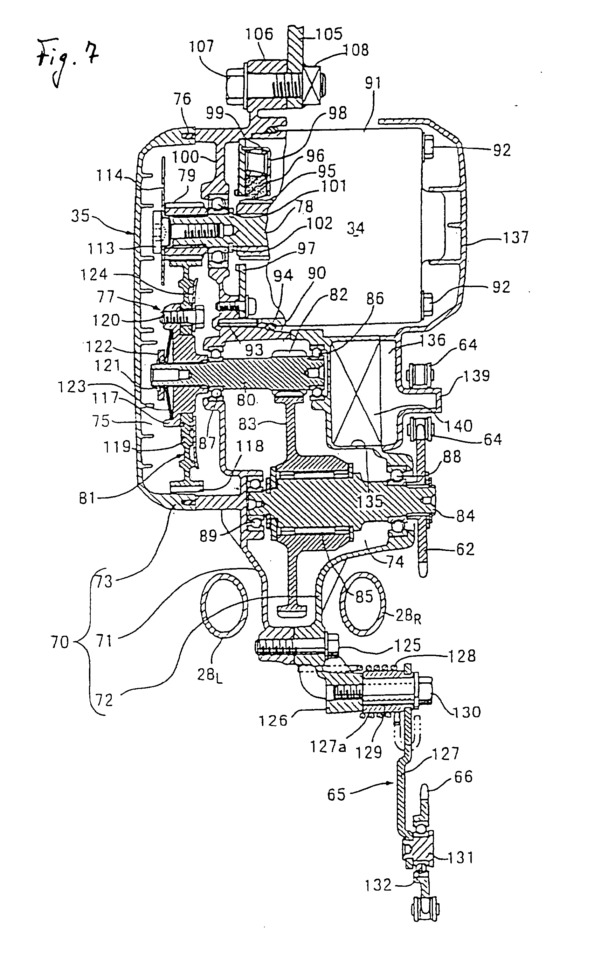

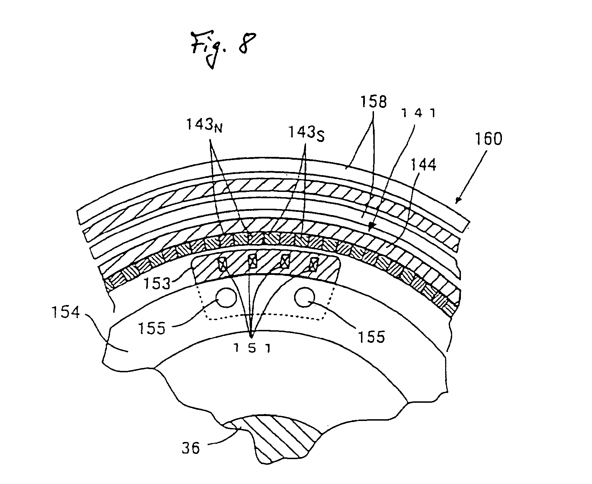

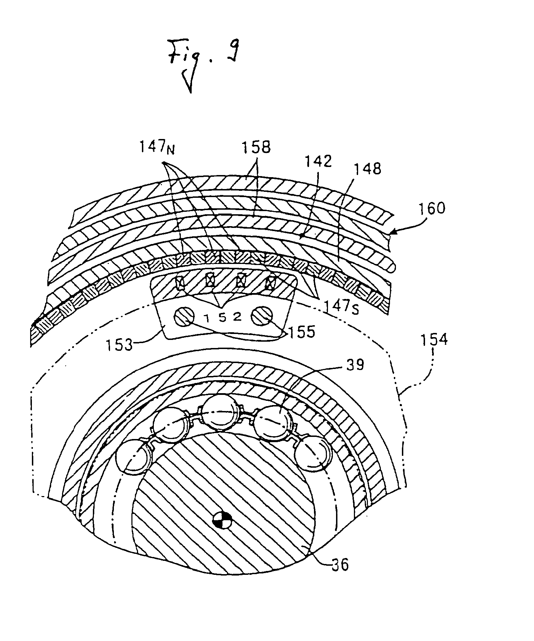

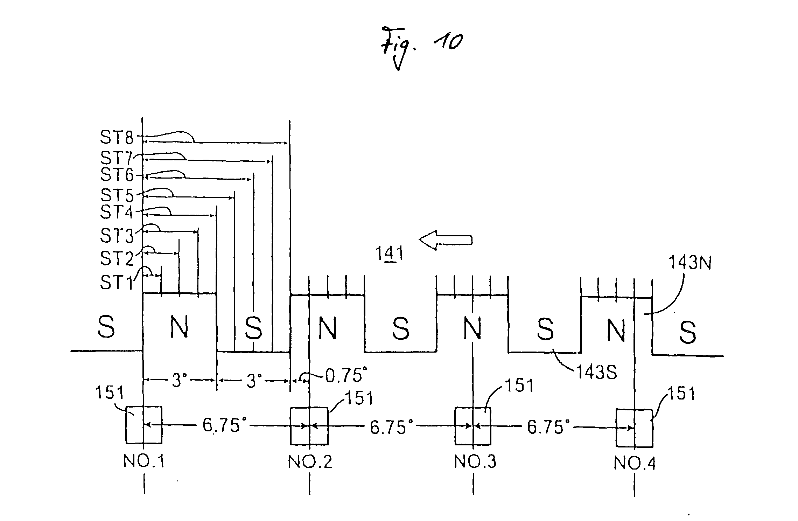

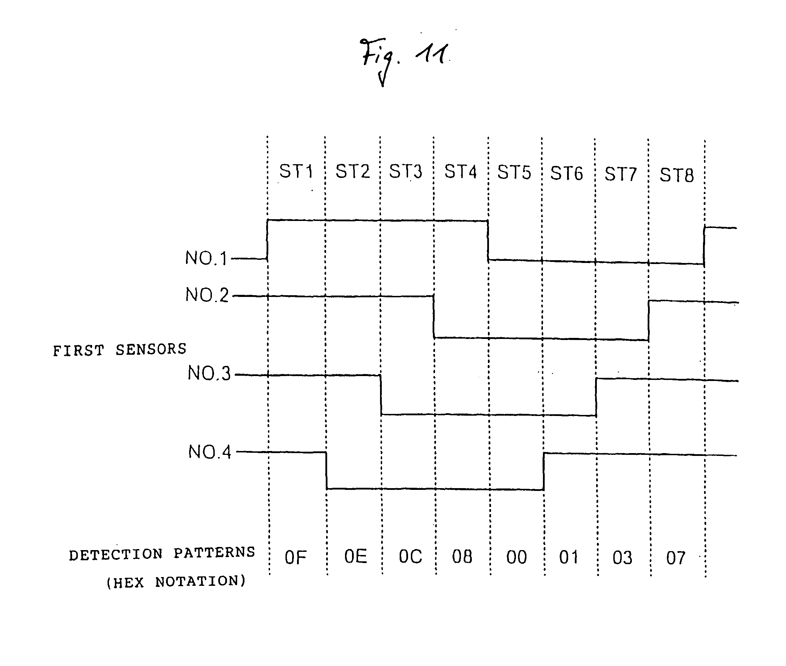

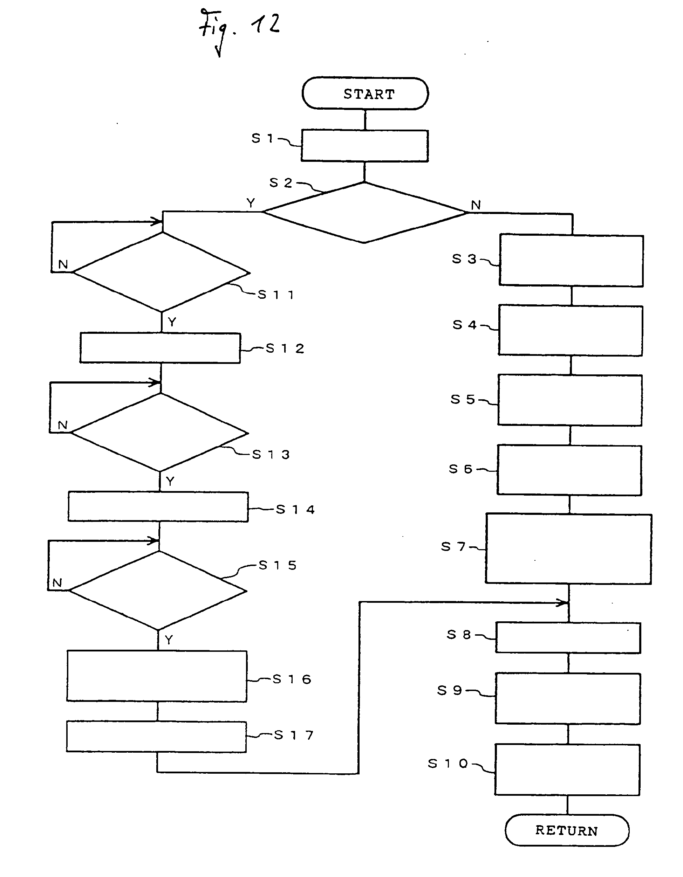

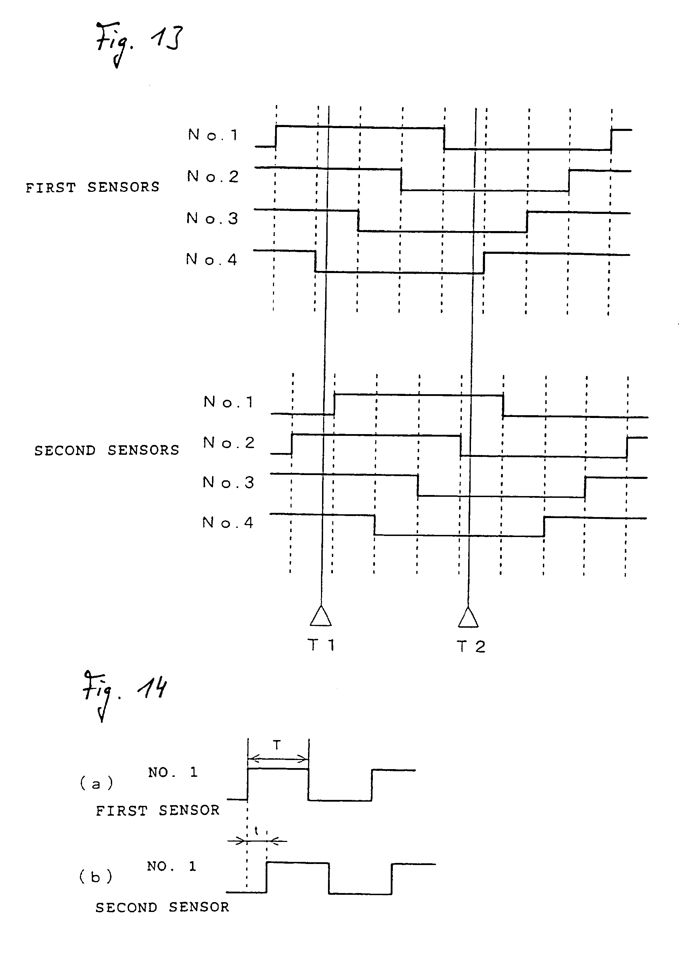

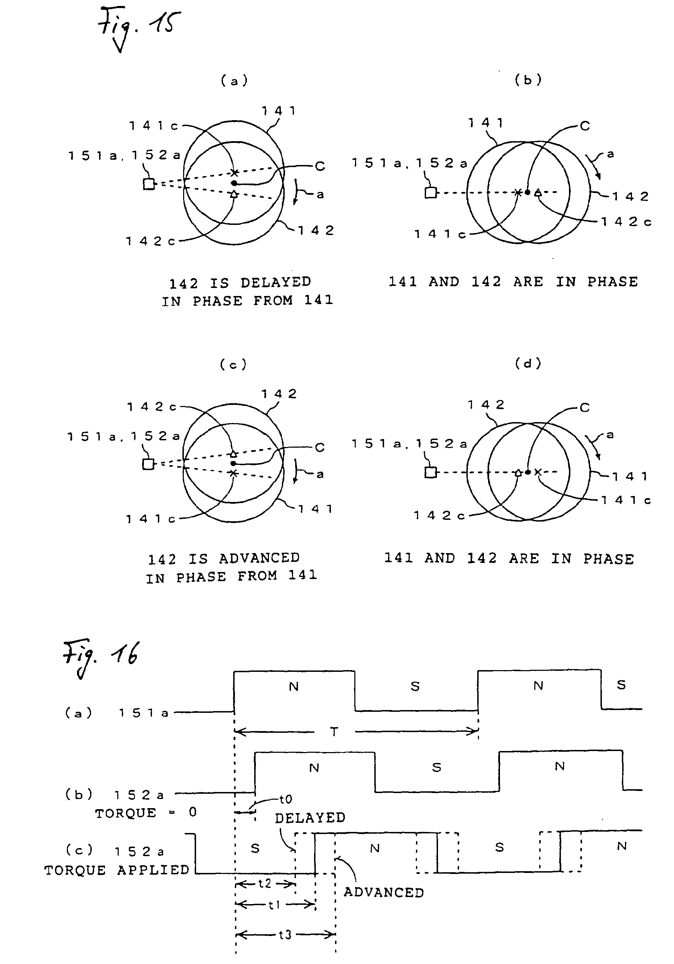

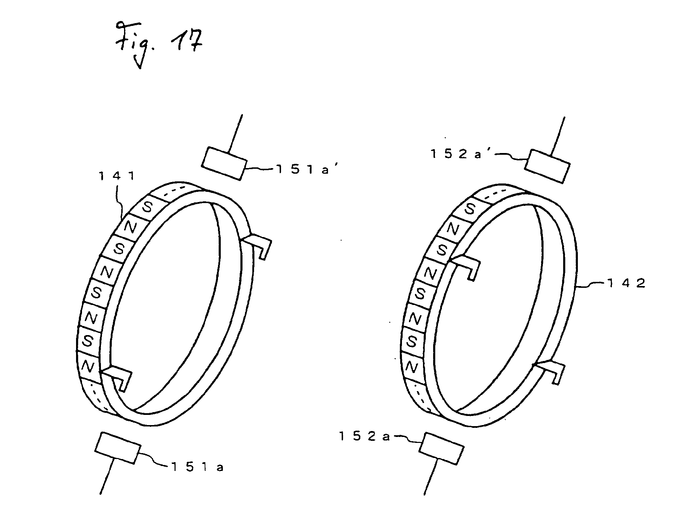

A preferred embodiment of the present invention will now be described with reference to the attached drawings. FIGS. 1 to 14 show a preferred embodiment of the present invention applied to a motor-assisted bicycle, in which FIG. 1 is a side view of the motor-assisted bicycle; FIG. 2 is an enlarged view of an essential part of FIG. 1. FIG. 3 is a cross section taken along the line 3-3 in FIG. 2; FIG. 4 is an enlarged view of an essential part of FIG. 3. FIG. 5 is a cross section taken along the line 5-5 in FIG. 4; FIG. 6 is a cross section taken along the line 6-6 in FIG. 4; FIG. 7 is an enlarged cross section taken along the line 7-7 in FIG. 2; FIG. 8 is a cross section taken along the line 8-8 in FIG. 4. FIG. 9 is a cross section taken along the line 9-9 in FIG. 4; FIG. 10 is a schematic view showing a relative positional relation between first sensors and magnetic poles of a first magnetic ring; FIG. 11 is a schematic view for illustrating detection patterns by the first sensors in association with changes in circumferential relative position of the first magnetic ring; FIG. 12 is a flowchart showing a control routine for an electric motor to be executed in a control unit; FIG. 13 is a schematic view for illustrating detection patterns by the first and second sensors in association with relative rotation of the first and second magnetic ring; and FIGS. 14(a) and 14(b) are time charts for illustrating detection of a phase difference in a normal running condition of the bicycle.

Referring first to FIGS. 1 to 3, the motor-assisted bicycle has a substantially U-shaped body frame 21 open to the upside as viewed in side elevation. The body frame 21 has a front head pipe 22, a down pipe 23 extending rearward and obliquely downward from the head pipe 22, a support pipe 24 fixed to the rear end of the down pipe 23 and extending laterally therefrom, and a seat pipe 25 rising from the support pipe 24.

A front fork 26 is steerably supported to the head pipe 22. A front wheel WF is rotatably supported to the lower ends of the front fork 26. A steering handle 27 is fixed to the upper end of the front fork 26. A pair of right and left rear forks 28R and 28L extend rearward from the support pipe 24 at a rear portion of the body frame 21. A rear wheel WR is rotatably supported to the rear ends of the rear forks 28R and 28L. A pair of right and left stays 29 extend between an upper portion of the seat pipe 25 and the rear ends of the rear forks 28R and 28L. A seat post 31 is vertically movably mounted in the seat pipe 25 so as to extend upward from the upper end thereof. A seat 30 is mounted at the upper end of the seat pipe 31 so that the height of the seat 30 is adjustable.

A substantially L-shaped rear carrier 67 is located above the rear wheel WR, and a rear basket 33 is mounted on the rear carrier 67. The rear carrier 67 is fixedly supported by a pair of right and left vertical support members 68 extending upward from the rear ends of the rear forks 28R and 28L and by a horizontal support member 69 extending rearward from the upper end of the seat pipe 25. A battery storing box 32 for removably storing a battery B is provided inside the rear basket 33 at its front end portion.

A power unit 35 having an electric motor 34 as an assist power source supplied with electricity from the battery B is located behind the seat pipe 25. The power unit 35 is supported by the seat pipe 25 and the right rear fork 28R. A pedal shaft 36 coaxially extends through the support pipe 24 of the body frame 21. A pair of right and left crank pedals 37R and 37L are fixedly connected to the right and left ends of the pedal shaft 36, respectively. A pair of right and left cover plates 38R and 38L are provided to close the right and left open ends of the support pipe 24, respectively, so that the pedal shaft 36 is rotatably passed through the cover plates 38R and 38L. A pair of ball bearings 39 are interposed between the pedal shaft 36 and the cover plates 38R and 38L. Thus, the pedal shaft 36 is rotatably supported to the body frame 21.

A depression force applied to the crank pedals 37R and 37L at the right and left ends of the pedal shaft 36 is transmitted to a first rotating disk 40 in synchronism with rotation of the crank pedals 37R and 37L. A first one-way clutch 41 for cutting torque transmission from the first rotating disk 40 to the right crank pedal 37R is provided between the right crank pedal 37R and the first rotating disk 40.

Referring also to FIGS. 4 to 6, the first one-way clutch 41 includes a clutch inner ring 42 fixed to a base end portion of the right crank pedal 37R by a plurality of bolts 47 and coaxially surrounding the pedal shaft 36, a clutch outer ring 43 coaxially surrounding the clutch inner ring 42, and a plurality of (e.g., three) ratchet pawls 44 pivotably supported to the outer circumference of the clutch inner ring 42 and radially outward biased by an annular spring 45. A plurality of ratchet teeth 46 for engaging the ratchet pawls 44 are formed on the inner circumference of the clutch outer ring 43. The inner circumference of the first rotating disk 40 is fixed to the outer circumference of the clutch outer ring 43 by welding or the like.

The first one-way clutch 41 operates in such a manner that when the crank pedals 37R and 37L are depressed to normally rotate the pedal shaft 36, the depression force applied to the crank pedals 37R and 37L is transmitted to the first rotating disk 40, whereas when the crank pedals 37R and 37L are depressed to reversely rotate the pedal shaft 36, the first one-way clutch 41 slips to allow reverse rotation of the pedal shaft 36 and prevent transmission of torque from the first rotating disk 40 to the crank pedal 37R.

A second rotating disk 48 larger in diameter than the first rotating disk 40 is located adjacent to the first rotating disk 40 on the axial inside thereof along the axis of the pedal shaft 36 so as to coaxially surround the pedal shaft 36. An inner circumferential portion of the second rotating disk 48 is relatively rotatably sandwiched between the clutch inner ring 42 of the first one-way clutch 41 and a flange portion 50a of a cylindrical support member 50. The support member 50 is connected with the inner circumference of the clutch inner ring 42 by screw threads, for example, and relatively rotatably surrounds the pedal shaft 36. Further, a ringlike holding plate 49 is located adjacent to the first rotating disk 40 on the axial outside thereof along the axis of the pedal shaft 36 so as to sandwich an outer circumferential portion of the first rotating disk 40 in cooperation with the second rotating disk 48.

A plurality of (e.g., four) equally spaced guide holes 51 each elongated arcuately along a phantom circle about the axis of the pedal shaft 36 are formed at an outer circumferential portion of the first rotating disk 40. A plurality of cylindrical collars 52 are fitted in the guide holes 51, respectively, so as to be sandwiched between the second rotating disk 48 and the holding plate 49. A plurality of rivets 53 are inserted through the collars 52, respectively, to connect the second rotating disk 48 and the holding plate 49. Accordingly, the second rotating disk 48 and the holding plate 49 are allowed to rotate relative to the first rotating disk 40 in a movable range of each collar 52 within the corresponding guide hole 51. Although not shown, rustproof films for preventing generation of rust are attached to opposed faces of the first rotating disk 40 and the second rotating disk 48, and similar rustproof films are also attached to opposed faces of the first rotating disk 40 and the holding plate 49.

A plurality of spring retention holes 54 each elongated circumferentially of the first rotating disk 40 are further formed at the outer circumferential portion of the first rotating disk 40. Every two of the plural spring retention holes 54 are located between the adjacent guide holes 51. The second rotating disk 48 is formed with a plurality of spring restriction holes 55 respectively corresponding to the plural spring retention holes 54 of the first rotating disk 40, and the holding plate 49 is also formed with a plurality of spring restriction holes 56 respectively corresponding to the plural spring retention holes 54 of the first rotating disk 40. A plurality of coil springs 57 are retained in the plural spring retention holes 54, respectively, and restricted by the plural spring restriction holes 55 and 56 in the axial direction along the axis of the pedal shaft 36. When the first rotating disk 40 is not in relative rotation to the second rotating disk 48 and the holding plate 49, both ends of each coil spring 57 are in contact with the opposite ends of the corresponding spring retention hole 54 of the first rotating disk 40, the opposite ends of the corresponding spring restriction hole 55 of the second rotating disk 48, and the opposite ends of the corresponding spring restriction hole 56 of the holding plate 49. When the first rotating disk 40 is rotated relative to the second rotating disk 48 and the holding plate 49, one end of each coil spring 57 is kept in contact with one end of the corresponding retention hole 54, and the other end of each coil spring 57 is pushed by the other end of each of the corresponding restriction holes 55 and 56 to come away from the other end of the corresponding retention hole 54. Thus, the first rotating disk 40 is rotated relative to the second rotating disk 48 and the holding plate 49 with the coil springs 57 being compressed.

To maintain the retained condition of the coil springs 57 in the retention holes 54 and the restriction holes 55 and 56, the second rotating disk 48 is formed with a plurality of pairs of restriction tabs 55a each pair projecting from the opposite side edges of the corresponding restriction hole 55 substantially along the outer cylindrical surface of the corresponding coil spring 57, and the holding plate 49 is also formed with a plurality of pairs of restriction tabs 56a each pair projecting from the opposite side edges of the corresponding restriction hole 56 substantially along the outer cylindrical surface of the corresponding coil spring 57.

An annular cover 58 is mounted on the outer circumference of the holding plate 49 so as to cover the first rotating disk 40 and the holding plate 49. An annular elastic sealing member 59 is mounted on the clutch outer ring 43 of the first one-way clutch 41. The sealing member 59 has an outer circumferential lip portion 59a kept in elastic contact with the inner surface of the inner circumferential portion of the cover 58, and further has an inner circumferential lip portion 59b kept in elastic contact with the clutch inner ring 42. An annular space between the clutch inner ring 42 and the clutch outer ring 43 of the first one-way clutch 42 is filled with a grease 60 in such a manner that the grease 60 is sealed by the lip portion 59b of the sealing member 59.

The outer circumference of the second rotating disk 48 projecting radially outward from the cover 58 is formed with a pedal sprocket 61 coaxial with the pedal shaft 36. An endless chain 64 is wrapped around the pedal sprocket 61, an assist sprocket 62 to be driven by the power unit 35, and a driven sprocket 63 provided on the axle of the rear wheel WR. A tensioner 65 for applying a tension to the chain 64 is provided between the assist sprocket 62 and the driven sprocket 63. The tensioner 65 has a sprocket 66 meshing with the chain 64.

Accordingly, a depression force applied to the crank pedals 37R and 37L is transmitted through the first one-way clutch 41 to the first rotating disk 40, further transmitted to the second rotating disk 48, i.e., the pedal sprocket 61 as compressing the coil springs 57, and further transmitted through the chain 64 and the driven sprocket 63 to the rear wheel WR. On the other hand, an assist power applied from the power unit 35 to the assist sprocket 62 is transmitted through the chain 64 and the driven sprocket 63 to the rear wheel WR. At this time, the torque by the assist power from the power unit 35 is prevented from being transmitted to the crank pedals 37R and 37L by the operation of the one-way clutch 41.

Referring to FIG. 7, reference numeral 70 denotes a casing of the power unit 35. The casing 70 is composed of a left casing half 71, a right casing half 72 connected to the left casing half 71 so that a first chamber 74 is defined between the left casing half 71 and the right casing half 72, and a cover 73 connected to the left casing half 71 so that a second chamber 75 is defined between the left casing half 71 and the cover 73. A rubber gasket 76 is mounted on an end surface of the cover 73 connected to the left casing half 71.

The electric motor 34 having a rotation axis parallel to the rotation axis of the pedal shaft 36 is mounted on the casing 70. An output from the electric motor 34 is transmitted through a reduction gear train 77 to the assist sprocket 62, so as to assist a depression force applied to the crank pedals 37R and 37L.

The reduction gear train 77 for transmitting the motive power from the electric motor 34 to the assist sprocket 62 includes a drive gear 79 fixed to a motor shaft 78 of the electric motor 34 in the second chamber 75, a first intermediate gear 81 fixed to one end of an idle shaft 80 and meshing with the drive gear 79 in the second chamber 75, a second intermediate gear 82 integrally formed on the outer circumference of the idle shaft 80 in the first chamber 74, a driven gear 83 meshing with the second intermediate gear 82 in the first chamber 74, a rotating shaft 84 arranged coaxially with the driven gear 83 in the first chamber 74, and a second one-way clutch 85 interposed between the driven gear 83 and the rotating shaft 84. The rotating shaft 84 projects from the right casing half 72, and the assist sprocket 62 is fixed to a right end portion of the rotating shaft 84 projecting from the right casing half 72.

The idle shaft 80 has an axis parallel to the axis of the motor shaft 78 of the electric motor 34. A ball bearing 86 is interposed between the right casing half 72 and the idle shaft 80, and a ball bearing 87 is interposed between the left casing half 71 and the idle shaft 80. The rotating shaft 84 has an axis parallel to the axis of the idle shaft 80. A ball bearing 88 is interposed between the right casing half 72 and the rotating shaft 84, and a ball bearing 89 is interposed between the left casing half 71 and the rotating shaft 84.

In the reduction gear train 77, the torque generated by the operation of the electric motor 34 is transmitted to the assist sprocket 62. When the operation of the electric motor 34 is stopped, idling of the rotating shaft 84 is allowed by the operation of the second one-way clutch 85 to prevent interference with rotation of the assist sprocket 62 by the depression force applied to the crank pedals 37R and 37L.

The left casing half 71 of the casing 70 is integrally formed with a cylindrical portion 90 projecting to the side opposite to the cover 73. The electric motor 34 has a cylindrical motor housing 91 having a closed right end and an open left end. The motor housing 91 is engaged at its open end with the cylindrical portion 90 of the left casing half 71 and secured to the left casing half 71 by a plurality of (e.g., two) bolts 92. A positioning pin 93 is implanted in the left casing half 71 and is engaged with the open end of the motor housing 91, so as to circumferentially position the motor housing 91 inside the cylindrical portion 90. Further, the outer surface of the motor housing 91 at a portion near the open end and the inner surface of the cylindrical portion 90 are formed with mutually opposed shoulder portions for holding an annular sealing member 94 therebetween, so that when the motor housing 91 is engaged with the cylindrical portion 90 and fixed to the left casing half 71, the sealing member 94 is held between the motor housing 91 and the cylindrical portion 90.

The electric motor 34 has the motor shaft 78 having an axis parallel to the axis of the pedal shaft 36. A commutator 95 is provided on the motor shaft 78, and a plurality of brushes 96 are in sliding contact with the commutator 95. The left casing half 71 is further integrally formed with a support wall portion 100 opposed to the open end of the motor housing 91 so as to close the inner end of the cylindrical portion 90. A nonconductive support plate 97 is secured to the support wall portion 100, and a plurality of holders 98 are mounted on the support plate 97. The plural brushes 96 are held between the support plate 97 and the holders 98, respectively. A plurality of springs 99 are interposed between the holders 98 and the brushes 96, respectively, so that the brushes 96 are biased by the springs 99 to come into sliding contact with the commutator 95.

The motor shaft 78 is rotatably passed through the support wall portion 100 to project into the second chamber 75. That is, a ball bearing 101 is press-fitted with the support wall portion 100 and the motor shaft 78 is passed through the ball bearing 101. A stop ring 102 is mounted on the motor shaft 78 to stop axial movement of the inner ring of the ball bearing 101 toward the commutator 95.

The casing 70 is supported to the seat pipe 25 of the body frame 21 and the right rear fork 28R in such a manner that the electric motor 34 is located behind and above the pedal shaft 36. That is, a hanger portion 106 projecting upward from the upper end of the left casing half 71 is secured to a bracket 105 by means of a bolt 107 and a nut 108. The bracket 105 is fixed to the seat pipe 25. Further, a hanger portion 110 projecting frontward from the right and left casing halves 72 and 71 is secured to a bracket 109 by means of a bolt 111 and a nut 112. The bracket 109 is fixed to the right rear fork 28R.

The drive gear 79 is splined with an end portion of the motor shaft 78 projecting into the second chamber 75. A bolt 113 is threadedly engaged with the projecting end portion of the motor shaft 78 in coaxial relationship therewith in such a manner as to hold the drive gear 79 and a reluctor 114 in cooperation with the inner ring of the ball bearing 101, thereby fixing the drive gear 79 to the motor shaft 78 and preventing axial movement of the drive gear 79 along the axis of the motor shaft 78.

As shown in FIG. 2, an electromagnetic pickup coil type rotational speed sensor 116 for detecting a rotational speed of the motor shaft 78 in cooperation with the reluctor 114 is fixed to the left casing half 71 of the casing 70 and located in the second chamber 75 so as to face the reluctor 114.

The first intermediate gear 81 has an outer circumferential portion formed of synthetic resin, which meshes with the drive gear 79. That is, the first intermediate gear 81 is composed of a metal boss 117 and a synthetic resin ring 119 secured to each other by means of a plurality of bolts 120. The boss 117 is connected to the idle shaft 80, and the ring 119 has an outer circumferential toothed portion 118.

The boss 117 is splined with the idle shaft 80 in such a manner that one end of the boss 117 is in abutment against the inner ring of the ball bearing 87 supported to the idle shaft 80. A stop ring 121 is mounted on the idle shaft 80 at its one end present in the second chamber 75, and a spring retainer ring 122 is mounted on the idle shaft 80 so as to be prevented from axially moving away from the boss 117. A coned disk spring 123 is interposed between the other end of the boss 117 and the spring retainer ring 122. The coned disk spring 123 exerts a spring force to bias the first intermediate gear 81 against the inner ring of the ball bearing 87, thereby fixing the first intermediate gear 81 to the idle shaft 80. Further, a metal reinforcing disk 124 is in abutment against one side surface of the ring 119, and is secured to the ring 119 by the bolts 120 for fixing the ring 119 to the boss 117.

The rotating shaft 84 is rotatably supported to the casing 70 in such a manner that a lower portion of the driven gear 83 mounted on the rotating shaft 84 through the second one-way clutch 85 is located between the right and left rear forks 28R and 28L. The right and left casing halves 72 and 71 are secured to each other by a plurality of bolts 125. Lower portions of the right and left casing halves 72 and 71 extend downward between the right and left rear forks 28R and 28L so as to cover a lower portion of the driven gear 83. Thus, the lower portions of the right and left casing halves 72 and 71, i.e., the lower portion of the casing 70 is located at a level lower than the level of the rear forks 28R and 28L, so that the center of gravity of the power unit 35 can be located at a level as low as possible, thereby contributing to lowering of the center of gravity of the motor-assisted bicycle.

The right casing half 72 is integrally formed at its lower end with an arm portion 126. A tensioner 65 for applying a tension to the chain 64 is mounted on the arm portion 126. The tensioner 65 includes a lever 127 supported at its base end portion to the arm portion 126 so as to be pivotable about an axis parallel to the axis of the rotating shaft 84, a sprocket 66 rotatably supported to the front end of the lever 127, and a spring 128 for biasing the lever 127 in a direction of tightening the chain 64 meshing with the sprocket 66.

The lever 127 is provided at its base end portion with a cylindrical portion 127a having an axis parallel to the axis of the rotating shaft 84. A cylindrical pivot shaft 129 is inserted in the cylindrical portion 127a of the lever 127 and secured to the arm portion 126 by a bolt 130. The spring 128 is a torsion spring surrounding the cylindrical portion 127a and having one end engaged with the arm portion 126 and the other end engaged with the lever 127.

A shaft 131 having an axis parallel to the axis of the pivot shaft 129 is fixed to the front end portion of the lever 127, and the sprocket 66 is rotatably mounted on the front end portion of the lever 127 through a ball bearing 132 interposed between the shaft 131 and the sprocket 66.

The assist sprocket 62 mounted on the rotating shaft 84 meshes with a lower chain line as a slacking portion of the chain 64 wrapped between the pedal sprocket 61 and the driven sprocket 63. The rotating shaft 84, or the assist sprocket 62 is located above the rear forks 28R and 28L, and the sprocket 66 of the tensioner 65 is located in the vicinity of the assist sprocket 62 at a position lower than a line connecting the center of the pedal sprocket 61 and the center of the assist sprocket 62. Further, a wrapping angle $\alpha$ of the chain 64 around the assist sprocket 62 is set to a large angle not less than 120°, e.g., to 160° as shown in FIG. 2.

A recess 135 is defined on the outer side surface of the right casing half 72 between the rotating shaft 84 and the electric motor 34. A cover 137 for covering the recess 135 and a part of the electric motor 34 is secured to the left casing half 71 by a plurality of bolts 138. A chamber 136 is defined by the cover 137 and the recess 135 to accommodate a control unit 140. As shown in FIG. 7, the control unit 140 is located between the chain 64 and the reduction gear train 77.

The operation of the electric motor 34 is controlled by the control unit 140. More specifically, the control unit 140 controls the operation of the electric motor 34 according to a rotational speed of the electric motor 34 detected by the rotational speed sensor 116 and an input torque generated by the crank pedals 37R and 37L.

The outer surface of the cover 137 is integrally formed with a guide projection 139 for guiding the chain 64 in such a manner as to avoid mutual contact of a portion of the chain 64 wrapped around the assist sprocket 62 and a portion of the chain 64 extending between the driven sprocket 63 and the pedal sprocket 61. As shown in FIG. 2, the guide projection 139 covers the wrapped portion of the chain 64 around the assist sprocket 62 from the upper side thereof.

Referring again to FIG. 4, a first magnetic ring 141 rotating with the first rotating disk 40 is located opposite to the first rotating disk 40 with respect to the second rotating disk 48. Further, a second magnetic ring 142 rotating with the second rotating disk 48 is located so that the first magnetic ring 141 is interposed between the second magnetic ring 142 and the second rotating disk 48. In other words, the first and second magnetic rings 141 and 142 are juxtaposed on one side of the first and second rotating disks 40 and 48 in their axial direction.

Referring also to FIG. 8, the first magnetic ring 141 is composed of a cylindrical first housing 144 formed of a nonmagnetic material such as synthetic resin and a ring consisting of a plurality of N poles 143N and a plurality of S poles 143S provided on the inner circumference of the first housing 144 so as to be alternately arranged. For example, 60 N poles and 60 S poles are alternately arranged as the N poles 143N and the S poles 143S, respectively, with a central angle of 3 degrees for each on the inner circumference of the first housing 144.

The second rotating disk 48 adjacent to the first magnetic ring 141 is formed with a plurality of (e.g., four) through holes 145 circumferentially arranged at intervals. Similarly, the first rotating disk 40 is formed with a plurality of engaging holes 146 corresponding to the through holes 145. On the other hand, the first housing 144 of the first magnetic ring 141 is integrally formed with a plurality of leg portions 144a respectively inserted through the through holes 145 of the second rotating disk 48 and abutting against the first rotating disk 40, and a plurality of hook portions 144b respectively inserted through the through holes 45 of the second rotating disk 48 and elastically engaging with the engaging holes 146 of the first rotating disk 40. Thus, the first magnetic ring 141 is elastically engaged with the first rotating disk 40. The first and second rotating disks 40 and 48 are allowed to rotate relative to each other. Accordingly, each through hole 145 is relatively long in the circumferential direction of the second rotating disk 48 so as to avoid contact of the corresponding leg portion 144a and the corresponding hook portion 144b with the circumferentially opposite ends of the through hole 145 even during relative rotation of the first and second rotating disks 40 and 48.

Referring also to FIG. 9, the second magnetic ring 142 is composed of a cylindrical second housing 148 formed of a nonmagnetic material such as synthetic resin and a ring consisting of a plurality of N poles 147N and a plurality of S poles 147S provided on the inner circumference of the second housing 148 so as to be alternately arranged. The N poles 147N and the S poles 147S are arranged on the inner circumference of the second housing 148 with the same central angle for each as that of the N poles 143N and the S poles 143S of the first magnetic ring 141.

The second rotating disk 48 is formed with a plurality of (e.g., four) engaging holes 149 circumferentially arranged at intervals. The second housing 148 of the second magnetic ring 142 is integrally formed with a plurality of (e.g., four) leg portions 148a abutting against the second rotating disk 48 and a plurality of hook portions 148b elastically engaging with the engaging holes 149 of the second rotating disk 48, respectively. Thus, the second magnetic ring 142 is elastically engaged with the second rotating disk 48. On the other hand, the first rotating disk 40 is formed with a plurality of openings 150 for respectively receiving the hook portions 148b engaged with the engaging holes 149. Since the first and second rotating disks 40 and 48 are allowed to rotate relative to each other, each opening 150 is relatively long in the circumferential direction of the first rotating disk 40 so as to avoid contact of the corresponding hook portion 148b with the circumferentially opposite ends of the opening 150 even during relative rotation of the first and second rotating disks 40 and 48.

The second housing 148 of the second magnetic ring 142 is integrally formed with an annular cover portion 148c extending radially outward from the position where the leg portions 148a are formed. The cover portion 148c covers the restriction holes 55 of the second rotating disk 48 from one side thereof opposite to the first rotating disk 40.

A plurality of (e.g., four) first sensors 151 for detecting the N poles 143N and the S poles 143S of the first magnetic ring 141 are arranged radially inside of the first magnetic ring 141 at equal intervals. Similarly, a plurality of (e.g., four) second sensors 152 for detecting the N poles 147N and the S poles 147S of the second magnetic ring 142 are arranged radially inside of the second magnetic ring 142 at equal intervals. Any sensors capable of detecting magnetic poles, such as Hall elements and MR elements, may be used as the first and second sensors 151 and 152.

The first sensors 151 and the second sensors 152 are embedded in a base member 153 formed of synthetic resin or the like. The base member 153 is secured by a plurality of (e.g., two) screw members 155 to a support ring 154 held between the cover plate 38R threadedly engaged with the support pipe 24 of the body frame 21 and the right end of the support pipe 24.

Referring to FIG. 10, the four first sensors 151 are annularly arranged at equal intervals with a central angle of 6.75°, while the central angle of each of the N poles 143N and the S poles 143S is set to 3°. With this arrangement of the N poles 143N, the S poles 143S, and the first sensors 151, a first stage ST1 to an eighth stage ST8 are set to have an angular range of 0.75N (N is an integer of 1 to 8). Accordingly, when the first magnetic ring 141 is angularly shifted relative to the fixed first sensors 151 in a direction shown by an arrow in FIG. 10, the combination pattern of detection signals by the four first sensors 151 becomes different according to the difference of the first to eighth stages ST1 to ST8.

Assuming that the four first sensors 151 are numbered by NO. 1 to NO. 4 in the order of arrangement and that each of the first sensors 151 outputs a high-level signal upon detection of each N pole 143N, the first sensors 151 of NO. 1 to NO. 4 output high-level and low-level signals in the first to eighth stages ST1 to ST8 as shown in FIG. 11. More specifically, letting "1" denote the high-level signal and "0" denote the low-level signal, the combination of the output signals from the first sensors 151 in the first stage ST1 is expressed as "1111" in binary notation (0F in hexadecimal notation). Similarly, the combination of the output signals from the first sensors 151 in the second stage ST2 is expressed as "1110" in binary notation (0E in hexadecimal notation); the combination of the output signals from the first sensors 151 in the third stage ST3 is expressed as "1100" in binary notation (0C in hexadecimal notation); the combination of the output signals from the first sensors 151 in the fourth stage ST4 is expressed as "1000" in binary notation (08 in hexadecimal notation); the combination of the output signals from the first sensors 151 in the fifth stage ST5 is expressed as "0000" in binary notation (00 in hexadecimal notation); the combination of the output signals from the first sensors 151 in the sixth stage ST6 is expressed as "0001" in binary notation (01 in hexadecimal notation); the combination of the output signals from the first sensors 151 in the seventh stage ST7 is expressed as "0011" in binary notation (03 in hexadecimal notation); and the combination of the output signals from the first sensors 151 in the eighth stage ST8 is expressed as "0111" in binary notation (07 in hexadecimal notation).

The four second sensors 152 are embedded in the base member 153 so as to face the N poles 147N and the S poles 147S of the second magnetic ring 142 with the same positional relationship as that between the first sensors 151 and the N poles 143N and the S poles 143S of the first magnetic ring 141. Accordingly, when the second magnetic ring 142 is angularly shifted relative to the fixed second sensors 152 from the first stage ST1 to the eighth stage ST8, the combination pattern of detection signals by the four second sensors 152 becomes different as in the case of the four first sensors 151.

Accordingly, if the maximum value of a rotational phase difference between the first and second rotating disks 40 and 48 is in the range of the eighth stage ST8 (8 x 0.75° = 6°), the combination pattern of detection signals by the first and second sensors 151 and 152 changes according to the above rotational phase difference caused by an input torque to the crank pedals 37R and 37L, so that the control unit 140 can determine the rotational phase difference between the rotating disks 40 and 48.

The detection signals from the first sensors 151 and the second sensors 152 are input into the control unit 140. The control unit 140 controls the operation of the electric motor 34 according to the detection signals from the first and second sensors 151 and 152 in accordance with the control routine shown in FIG. 12.

Referring to FIG. 12, a vehicle speed is computed in step S1, and it is determined in step S2 whether or not the vehicle speed is equal to or greater than a set speed VS. The set speed VS is a preset value near "0" for determining whether or not the motor-assisted bicycle is almost at rest before starting to run with the crank pedals 37R and 37L starting to be depressed. For example, this preset value is in the range of 0.5 to 1 km/h. If the vehicle speed is less than the set speed VS, that is, if the crank pedals 37R and 37L start to be depressed, the program proceeds to step S3.

In step S3, output signals from the four first sensors 151 are read, and in step S4, a detection pattern by the four first sensors 151 is calculated. Further, in step S5, output signals from the four second sensors 152 are read, and in step S6, a detection pattern by the four second sensors 152 is calculated. Further, in step S7, a phase difference between the first and second magnetic rings 141 and 142, that is, a rotational phase difference between the first and second rotating disks 40 and 48 is calculated from the combination of the detection patterns by the first sensors 151 and the second sensors 152.

It is now assumed that the output signals from the first sensors 151 of NO. 1 to NO. 4 and the output signals from the second sensors 152 of NO. 1 to NO. 4 are shown in FIG. 13 in association with generation of the rotational phase difference between the rotating disks 40 and 48 according to the input torque. In this case, the detection pattern by the first sensors 151 at a detection timing T1 is expressed as "0E" (hexadecimal notation), whereas the detection pattern by the second sensors 152 at the detection timing T1 is expressed as "07" (hexadecimal notation). That is, the detection pattern by the first sensors 151 at the detection timing T1 indicates the second stage ST2, whereas the detection pattern by the second sensors 152 at the detection timing T1 indicates the eighth stage ST8. Accordingly, the rotational phase difference between the rotating disks 40 and 48 is equal to (2 - 8 = -6). This value is subjected to a complementary processing based on the condition that the number of stages is "8" to obtain a result that the rotational phase difference is an angular range of two stages (1.5'). Similarly, the detection pattern by the first sensors 151 at a detection timing T2 is expressed as "00" (hexadecimal notation), whereas the detection pattern by the second sensors 152 at the detection timing T2 is expressed as "08" (hexadecimal notation). That is, the detection pattern by the first sensors 151 at the detection timing T2 indicates the fifth stage ST5, whereas the detection pattern by the second sensors 152 at the detection timing T2 indicates the fourth stage ST4. Accordingly, the rotational phase difference between the rotating disks 40 and 48 is equal to (5 - 4 = 1), which corresponds to an angular range of one stage (0.75).

In this manner, when 1/8 to 2/8 of a maximum detectable torque is input, the rotational phase difference corresponding to an angular range of one or two stages according to a detection timing is obtained as a digital value by the combination of the detection patterns by the first sensors 151 and the second sensors 152 in step S7. In step S8, the rotational phase difference is multiplied by a spring constant of each coil spring 57 provided between the first and second rotating disks 40 and 48 to obtain an input torque.

In step S9, a motor control quantity is decided according to the input torque obtained in step S8. More specifically, the operation of the electric motor 34 is duty-controlled. Accordingly, a duty control quantity of the electric motor 34 is calculated in step S9, and this duty control quantity calculated is then output in step S10.

The above procedure of steps S1 to S10 is performed to detect an input torque applied to the crank pedals 37R and 37L and control the operation of the electric motor 34 according to the detected input torque at starting depression of the crank pedals 37R and 37L. When the motor-assisted bicycle becomes a normal running condition, steps S11 to S17 are performed and subsequently steps S8 to S10 are performed. That is, when the vehicle speed becomes equal to or greater than the set speed VS in the decision of step S2, the program proceeds to step S11. In step S11, it is determined whether or not the output signal from the NO. 1 first sensor 151 of the four first sensors 151 has become a high level. If the output signal from the NO. 1 first sensor 151 has become a high level, counting by a timer is started in step S12.

In step S13, it is determined whether or not the output signal from the NO. 1 second sensor 152 of the four second sensors 152 has become a high level. If the output signal from the NO. 1 second sensor 152 has become a high level, a count value t by the timer is stored in step S14. In step S15, it is determined whether or not the output signal from the NO. 1 first sensor 151 has become a high level again. If the output signal from the NO. 1 first sensor 151 has become a high level again, a count value T by the timer is stored and the timer is reset in step S16.

In the case that the output signal from the NO. 1 first sensor 151 is shown in FIG. 14(a) and the output signal from the NO. 1 second sensor 152 is shown in FIG. 14(b) in the procedure of steps S11 to S16, the count value t indicates a time lag of the output signal from the NO. 1 second sensor 152 from the output signal from the NO. 1 first sensor 151, and the count value T indicates a detection period of the output signal from the No. 1 first sensor 151.

In step S17, t/T is calculated. That is, a phase difference between the first and second magnetic rings 141 and 142, i.e., a phase difference between the first and second rotating disks 40 and 48 can be obtained as t/T which is an analog value in step S17. Thereafter, steps S8 to S10 are sequentially performed to thereby control the operation of the electric motor 34 during normal running of the motor-assisted bicycle.

In the procedure of steps S11 to S17, the phase difference between the first and second magnetic rings 141 and 142 can be accurately detected in the condition that the first and second magnetic rings 141 and 142 are perfectly aligned with each other. If the alignment of the crank pedal 37R and the sprocket 61 is poor, so that the first and second magnetic rings 141 and 142 are misaligned with each other, the accuracy of detection of the above phase difference is reduced for the following reason.

FIGS. 15(a) to 15(d) are schematic views showing four different conditions in a locus of eccentric rotation in the case that the axes 141c and 142c of the first and second magnetic rings 141 and 142 are deviated from the center C of eccentric rotation of the rings 141 and 142. The conditions of the rings 141 and 142 change from FIG. 15(a) through FIG. 15(d) and FIG. 15(c) to FIG. 15(b) in association with rotation of the rings 141 and 142 in a direction shown by an arrow a. In FIGS. 15(a) to 15(d), reference numerals 151a and 152a denote one of the first sensors 151 and one of the second sensors 152 corresponding thereto.

It is now assumed that the first and second magnetic rings 141 and 142 are rotated in the direction a. In the case that the axes 141c and 142c of the first and second magnetic rings 141 and 142 are vertically deviated from each other, that is, the axes 141c and 142c take vertical positions with respect to the center C of rotation as shown in FIGS. 15(a) and 15(c), the first and second magnetic rings 141 and 142 become out of phase in the case of FIG. 15(a) in such a manner that the first sensor 151a detects the axis 141c of the first magnetic ring 141 and the second sensor 152a detects the axis 142c of the second magnetic ring 142. Accordingly, the axis 142c is detected as a position delayed from the axis 141c. In the case of FIG. 15(c), the axis 142c is detected as a position advanced from the axis 141c. Thus, the positions of the ring 142 to the ring 141 in the cases of FIGS. 15(a) and 15(c) is a delayed position and an advanced position, respectively. On the other hand, in the case that the axes 141c and 142c of the first and second magnetic rings 141 and 142 are horizontally deviated from each other, that is, the axes 141c and 142c take horizontal positions with respect to the center C of rotation as shown in FIGS. 15(b) and 15(d), the first and second magnetic rings 141 and 142 become in phase.

FIGS. 16(a) to 16(c) are time charts of detection signals from the first and second sensors 151a and 152a in the case that the first and second magnetic rings 141 and 142 are misaligned with each other. More specifically, FIG. 16(a) shows a detection signal from the first sensor 151a detecting the magnetic poles of the first magnetic ring 141, and FIG. 16(b) shows a detection signal from the second sensor 152a detecting the magnetic poles of the second magnetic ring 142 rotating at a constant velocity with no torque applied. In this condition, when torque is applied to the crank pedals, the second sensor 152a outputs a detection signal as shown in FIG. 16(c).

In the case that the first and second magnetic rings 141 and 142 are perfectly aligned with each other or that they are in the position where the axes of the first and second magnetic rings 141 and 142 are horizontally deviated from each other as shown in FIG. 15(b) or 15(d), the rings 141 and 142 are in phase during rotation at a constant velocity with no torque applied. When torque is applied, a phase difference between the rings 141 and 142 is detected as t1 proportional to the torque. In the case of FIG. 15(a), a phase difference between the rings 141 and 142 is detected at t2 shorter than the original phase difference t1 caused by an actual pedal torque, because the second magnetic ring 142 is originally delayed by t0 in phase from the first magnetic ring 141 during rotation at a constant velocity with no torque applied. On the other hand, in the case of FIG. 15(c), a phase difference between the rings 141 and 142 is detected as t3 longer than t1 because the second magnetic ring 142 is originally advanced by t0 in phase from the first magnetic ring 141.

In step S17 shown in FIG. 12, a phase change angle A upon application of torque can be obtained from the following equation.

```
A = {(t1 - t0)/T} x {360°/(the number of magnetic poles of magnetic rings)/2}
```

However, in the case of FIG. 15(a), the original phase difference t1 caused by an actual pedal torque is changed to t2 as mentioned above, whereas in the case of FIG. 15(c), the phase difference t1 is changed to t3 as mentioned above (t3 > t1 > t2). In association with rotation of the rings 141 and 142, the phase difference changes in the sequence of t2 → t1 → t3 → t1 → t2 ..., so that a correct value of the phase change angle A cannot be obtained.

Thus, in the case that the first and second magnetic rings 141 and 142 are misaligned with each other, a correct value of the phase change angle A cannot be stably obtained, so that a correct pedal depression force cannot be obtained.

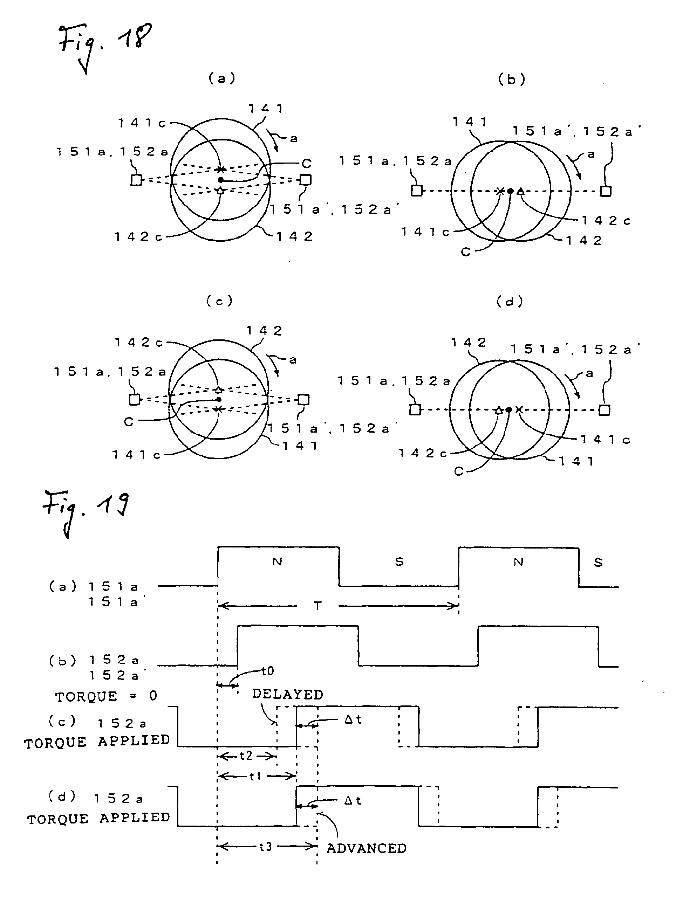

To solve this problem, the present invention includes a configuration as shown in FIG. 17. That is, a third sensor 151a' is located about 180° apart from the first sensor 151a in the direction of rotation of the first magnetic ring 141, and a fourth sensor 152a' is located about 180° apart from the second sensor 152a in the direction of rotation of the second magnetic ring 142. While the first and third sensors 151a and 151a' are located outside of the first magnetic ring 141, and the second and fourth sensors 152a and 152a' are located outside of the second magnetic ring 142, these sensors may be located inside of the respective rings 141 and 142.

FIGS. 18(a) to 18(d) are schematic views showing four different conditions in a locus of eccentric rotation in the case that the axes 141c and 142c of the first and second magnetic rings 141 and 142 are deviated from the center C of eccentric rotation of the rings 141 and 142 according to the configuration shown in FIG. 17. The conditions of the rings 141 and 142 change from FIG. 18(a) through FIG. 18(d) and FIG. 18(c) to FIG. 18(b) in association with rotation of the rings 141 and 142 in a direction shown by an arrow a. FIGS. 19(a) to 19(d) show time charts of detection signals from the first, second, third, and fourth sensors 151a, 152a, 151a', and 152a'.

In the condition shown in FIG. 18(a), the second magnetic ring 142 is delayed in phase from the first magnetic ring 141, so that the second sensor 152a detects a phase difference t2 (= t1 - Δt) as shown in FIG. 19(c). On the other hand, the phase of the second magnetic ring 142 to the first magnetic ring 141 at the position of the fourth sensor 152a' is opposite to the above, because the fourth sensor 152a' is located about 180° apart from the second sensor 152a as mentioned above. That is, the second magnetic ring 142 is advanced in phase from the first magnetic ring 141. Accordingly, the fourth sensor 152a' detects a phase difference t3 (= t1 + Δt) as shown in FIG. 19(d).

A phase change angle B upon application of torque is obtained from the following equation according to the present invention.

$$B = [\{(t2 - t0)/T\} + \{(t3 - t0')/T\}]/2 \times \{360°/(\text{the number of magnetic poles of magnetic rings})/2\}$$

$$= [\{t1 - (t0 + t0')/2\}/T] \times \{360°/(\text{the number of magnetic poles of magnetic rings})/2\} \quad \dots (1)$$

By obtaining the phase change angle B from Eq. (1), the delayed phase difference and the advanced phase difference can be canceled and a correct value of the phase change angle B can be stably obtained. As a result, a correct pedal depression force can be obtained.

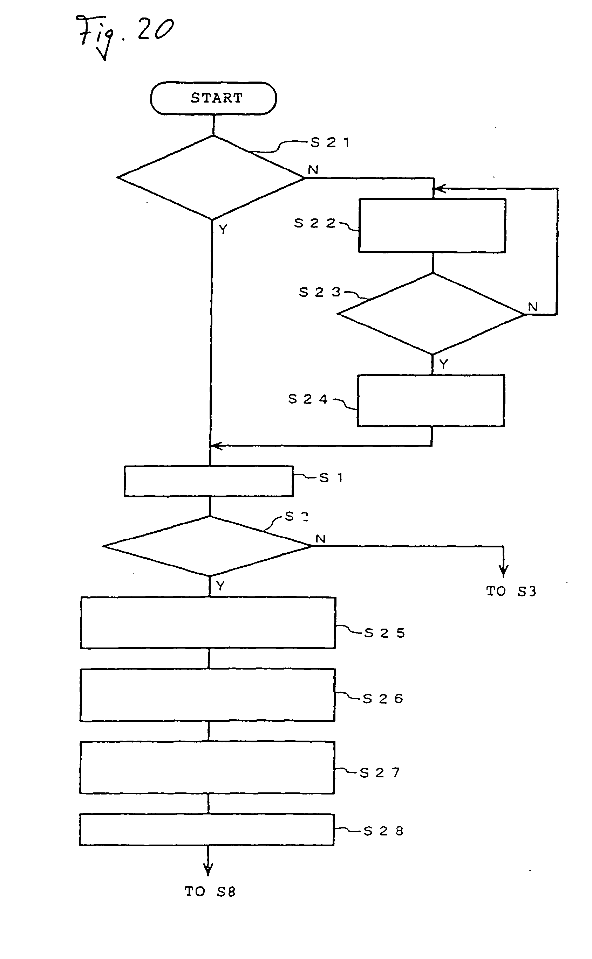

FIG. 20 shows a routine for controlling the operation of the electric motor 34 according to the present invention. In FIG. 20, the same steps as those shown in FIG. 12 are not shown and the description thereof will be omitted herein. In step S21, it is determined whether or not initial deviations have been detected. If the answer in step S21 is YES, the program proceeds to step S1, whereas if the answer in step S21 is NO, the program proceeds to step S22. In step S22, initial deviations t0 and t0' are detected where t0 is a deviation between the sensors 151a and 152a, and t0' is a deviation between the sensors 151a' and 152a'

In step S23, it is determined whether or not a memory switch is ON. If the answer in step S23 is YES, the program proceeds to step S24, in which the detected initial deviations t0 and t0' are stored into a memory. Once the initial deviations t0 and t0' are stored into the memory, the answer in step S21 in the next cycle of the routine becomes always YES. In general, steps S22 to S24 are carried out at the factory prior to shipment.

A vehicle speed is computed in step S1, and it is determined in step S2 whether or not the vehicle speed is equal to or greater than a set speed VS. If the answer in step S2 is NO, the program proceeds to step S3 shown in FIG. 12 to perform the same operation as mentioned above. If the answer in step S2 is YES, the program proceeds to step S25, in which a phase difference t2 is detected by the sensors 151a and 152a shown in FIG. 17 or 18. Next in step S26, a phase difference t3 is detected by the sensors 151a' and 152a' respectively spaced about 180' apart from the sensors 151a and 152a. Next in step S27, a period T is detected by the sensor 151a or 151a'. Next in step S28, a phase change angle B is obtained from Eq. (1). Thereafter, steps S8 to S10 shown in FIG. 12 are sequentially performed to control the operation of the electric motor 34 during normal running of the motor-assisted bicycle.

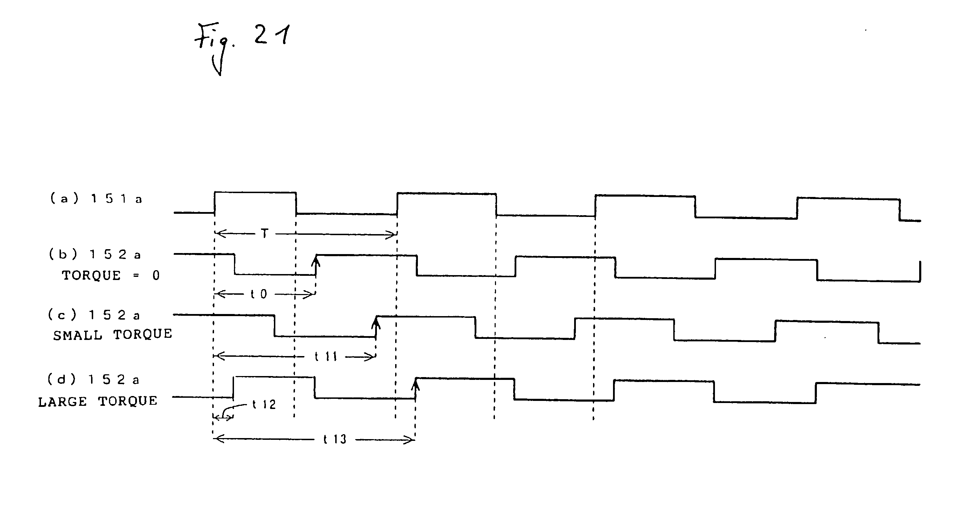

There will now be examined the case where the first and second magnetic rings 141 and 142 are well aligned with each other and the initial phase difference t0 between the first and second magnetic rings 141 and 142 is large as shown in FIG. 21(b). In the case that the pedal depression force is relatively small, i.e., in the case that the phase difference t11 of the signal detected by the sensor 152a is in the range of $t0 \leq t11 < T$ as shown in FIG. 21(c), the phase change angle A between the first and second magnetic rings 141 and 142 can be correctly obtained from Eq. (1).

When the pedal depression force becomes large, i.e., when the phase difference t13 between the first and second magnetic rings 141 and 142 falls in the range of $T \leq t13 < T + t0$ as shown in FIG. 21(d), the phase difference of the signal detected by the sensor 152a becomes t12 (< t0). As a result, the phase change angle A obtained from Eq. (1) becomes negative, so that it cannot be correctly obtained.

To solve this problem, Eq. (1) is replaced by Eq. (3) shown below in the case that the phase difference t12 detected by the sensor 152a is less than the initial phase difference t0.

$$A = [\{(t12 - t0)/T\} + 1] \times \{360°/(\text{the number of magnetic poles of magnetic rings}/2)\} \quad \ldots (3)$$

In the case where the first and second magnetic rings 141 and 142 are misaligned with each other, i.e., in the case where the axes 141c and 142c of the first and second magnetic rings 141 and 142 are deviated from each other, the phase change angle B upon application of torque is obtained in the following manner according to the magnitude of the initial phase difference. In the following equations, t0 is the initial phase difference between the first and second magnetic rings 141 and 142 at the sensors 151a and 152a; t11 is the phase difference detected by the sensors 151a and 152a; t0' is the initial phase difference between the first and second magnetic rings 141 and 142 at the sensors 151a' and 152a' angularly spaced about 180° apart from the sensors 151a and 152a with respect to the first and second magnetic rings 141 and 142, respectively; and t11' is the phase difference detected by the sensors 151a' and 152a'.

(1) For t11 ≥ t0 and t11' ≥ t0',

$$B = [\{(t11 - t0)/T\} + \{(t11' - t0')/T\}]/2 \times \{360°/(\text{the number of magnetic poles of magnetic rings}/2)\} \quad \ldots (4)$$

(2) For t11 ≥ t0 and t11' < t0',

$$B = [\{(t11 - t0)/T\} + \{(t11' + T - t0')/T\}]/2 \times \{360°/(\text{the number of magnetic poles of magnetic rings}/2)\} \quad \ldots (5)$$

(3) For t11 < t0 and t11' ≥ t0',

$$B = [\{(t11 + T - t0)/T\} + \{(t11' - t0')/T\}]/2 \times \{360°/(\text{the number of magnetic poles of magnetic rings}/2)\} \quad \ldots (6)$$

(4) For t11 < t0 and t11' < t0',

$$B = [\{(t11 + T - t0)/T\} + \{(t11' + T - t0')/T\}]/2 \times \{360°/(\text{the number of magnetic poles of magnetic rings}/2)\} \quad \ldots (7)$$

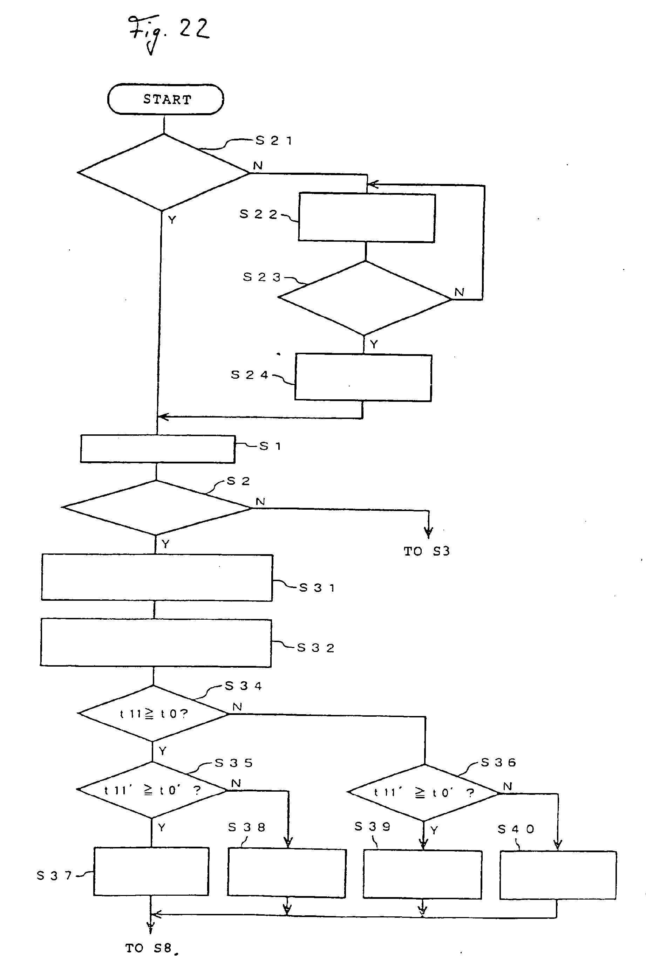

The control routine for the operation of the electric motor 34 according to the present invention will now be described with reference to FIG. 22, in which the same steps as those shown in FIGS. 12 and 20 are not shown and the description thereof will be omitted herein.

In step S31, a phase difference t11 is detected by the first and second sensors 151a and 152a. In step S32, a phase difference t11' is detected by the third and fourth sensors 151a' and 152a'.

In step S34, it is determined whether or not the condition of t11 ≥ t0 is met. If the answer in step S34 is YES, the program proceeds to step S35, in which it is determined whether or not the condition of t11' ≥ t0' is met. If the answer in step S35 is YES, the program proceeds to step S37, in which the phase change angle B is obtained from Eq. (4). If the answer in step S35 is NO, the program proceeds to step S38, in which the phase change angle B is obtained from Eq. (5).

If the answer in step S34 is NO, the program proceeds to step S36, in which it is determined whether or not the condition of t11' ≥ t0' is met. If the answer in step S36 is YES, the program proceeds to step S39, in which the phase change angle B is obtained from Eq. (6). If the answer in step S36 is NO, the program proceeds to step S40, in which the phase change angle B is obtained from Eq. (7).

After obtaining the phase change angle B as mentioned above, steps S8 to S10 shown in FIG. 12 are sequentially carried out to accurately control the operation of the electric motor 34 during normal running of the motor-assisted bicycle, irrespective of misalignment of the first and second magnetic rings 141 and 142.

Referring back to FIG. 4, a ringlike protective cover 158 is secured to the support ring 154 by a plurality of screw members 159, so as to cover the first and second magnetic rings 141 and 142 and the base member 153 in which the first and second sensors 151 and 152 are embedded, from the side opposite to the first and second rotating disks 40 and 48. Furthermore, a labyrinth structure 160 is formed between an outer circumferential portion of the protective cover 158 and the second housing 148 of the second magnetic ring 142 rotating about the axis of the pedal shaft 36, so as to minimize contamination of the first and second sensors 151 and 152 and the magnetic rings 141 and 142 with water, mud, etc.

The operation of the preferred embodiment mentioned above will now be described. When the crank pedals 37R and 37L are depressed to run the motor-assisted bicycle, a depression force applied to the crank pedals 37R and 37L is transmitted through the first one-way clutch 41, the first rotating disk 40, the coil springs 57, and the second rotating disk 48 to the pedal sprocket 61. Further, the torque input to the pedal sprocket 61 is transmitted through the chain 64 and the driven sprocket 63 to the rear wheel WR.

At this time, a rotational phase difference is generated between the first rotating disk 40 and the second rotating disk 48 with the coil springs 57 being compressed according to the depression force applied to the crank pedals 37R and 37L. Then, the control unit 140 computes the input torque according to the combination of detection signals from the plural first sensors 151 detecting the N poles 143N and the S poles 143S of the first magnetic ring 141 rotating with the first rotating disk 40 and detection signals from the plural second sensors 152 detecting the N poles 147N and the S poles 147S of the second magnetic ring 142 rotating with the second rotating disk 48. The control unit 140 further controls the electric motor 34 so that the electric motor 34 exerts an assist power according to the input torque computed above. Accordingly, an assist torque to be input to the assist sprocket 62 can be controlled according to the depression force applied to the crank pedals 37R and 37L, thereby reducing a load to the rider.

Also when the crank pedals 37R and 37L start to be operated and the rear wheel WR is not yet rotated, there is generated a rotational phase difference of the first rotating disk 40 relative to the second rotating disk 48. Accordingly, there is generated a rotational phase difference of the first magnetic ring 141 relative to the second magnetic ring 142, so that a pattern of combination of detection signals from the first sensors 151 and the second sensors 152 changes from that prior to starting operation of the crank pedals 37R and 37L. As a result, an input torque can be detected at starting operation of the crank pedals 37R and 37L in the rest condition of the motor-assisted bicycle, and an assist power by the electric motor 34 according to the detected input torque can be immediately applied to the rear wheel WR.

In this condition that the rear wheel WR is not rotated at starting operation of the crank pedals 37R and 37L, an input torque is computed according to the rotational phase difference obtained as a digital value. In contrast, when the condition of the motor-assisted bicycle becomes a normal running condition, the rotational phase difference can be obtained as an analog value, and an input torque can be computed linearly according to the analog rotational phase difference obtained above. Then, the electric motor 34 can exert an assist power according to the linear input torque. Accordingly, an assist torque linearly responsive to the input torque can be obtained. In this manner, an input torque can be reliably detected in an entire region from the operation starting condition of the crank pedals 37R and 37L to the normal running condition of the motor-assisted bicycle, and an assist power by the electric motor 34 according to the detected input torque can be applied to the rear wheel WR.

The first rotating disk 40 is connected through the first one-way clutch 41 to the right crank pedal 37R, and the second rotating disk 48 is located adjacent to the first rotating disk 40 with the coil springs 57 interposed therebetween in such a manner that the two rotating disks 40 and 48 are relatively rotated about the same axis. Further, the first and second magnetic rings 141 and 142 are located on one axial side of the first and second rotating disks 40 and 48. Accordingly, it is sufficient to define a space for locating the first and second sensors 151 and 152 on the one axial side of the first and second rotating disks 40 and 48, and it is not necessary to ensure an extra space for locating the sensors 151 and 152. In addition, the first and second magnetic rings 141 and 142 and the first and second sensors 151 and 152 are collectively mounted on the one axial side of the rotating disks 40 and 48, so that they can be easily mounted.

The first and second magnetic rings 141 and 142 are elastically engaged with the first and second rotating disks 40 and 48, respectively. Accordingly, the maintenance and mounting operation of the first and second magnetic rings 141 and 142 can be easily carried out.

The first magnetic ring 141 is formed by providing the plural N poles 143N and the plural S poles 143S on the inner circumference of the ringlike first housing 144, and the second magnetic ring 142 is formed by providing the plural N poles 147N and the plural S poles 147S on the inner circumference of the ringlike second housing 148. Further, the first and second sensors 151 and 152 are embedded in the common base member 153 and respectively located inside of the first and second magnetic rings 141 and 142. Thus, the first and second sensors 151 and 152 are located inside of the cylindrical first and second magnetic rings 141 and 142, respectively, thereby more saving a space. Furthermore, the first and second sensors 151 and 152 are covered with the first and second housings 144 and 148, respectively, thereby ensuring protection.

The wrapping angle $\alpha$ of the chain 64 around the assist sprocket 62 is set to a large angle not less than 120°, e.g., to 160°. Accordingly, the chain 64 can be prevented from disengaging from the assist sprocket 62, and an assist torque of the assist sprocket 62 can be effectively and reliably transmitted to the chain 64.

The assist sprocket 62 is positioned above the rear forks 28R and 28L and above the line connecting the center of the pedal sprocket 61 and the center of the driven sprocket 63. Further, the sprocket 66 of the tensioner 65 is positioned below this line in the vicinity of the assist sprocket 62. Accordingly, the power unit 35 can be effectively located in a limited space between the pedal shaft 36 and the rear wheel WR, and the tensioner 65 can be located at a maximum height from the road surface, thereby mounting the power unit 35 to the body frame 21 without reducing a road clearance.

The assist sprocket 62 meshes with the lower chain line as a slacking portion of the chain 64 extending between the pedal sprocket 61 and the driven sprocket 63. Accordingly, the power unit 35 can be mounted to the body frame 21 at its relatively low position, thereby setting the center of gravity of the body frame 21 at a relatively low position to contribute to improvement in running stability. In addition, a lower portion of the power unit 35 is located between the rear forks 28R and 28L, and the tensioner 65 is mounted to the lower portion of the power unit 35. Accordingly, the assist sprocket 62 can be located between the level of the rear forks 28R and 28L and the upper chain line as a tightening portion of the chain 64 extending between the pedal sprocket 61 and the driven sprocket 63. Thus, the power unit 35 can be compactly mounted in the limited space between the pedal shaft 36 and the rear wheel WR without damaging the light appearance of the motor-assisted bicycle.

The control unit 140 is located between the chain 64 and the reduction gear train 77. With this arrangement, the control unit 140 can be mounted to the power unit 35 by effectively using a space necessarily defined between the reduction gear train 77 and the chain 64. Further, the cover 137 mounted on the casing 70 of the power unit 35 is integrally formed with the guide projection 139 for covering the wrapped portion of the chain 64 around the assist sprocket 62, thereby effectively preventing fluttering of the chain 64 at the wrapped portion around the assist sprocket 62 and more effectively transmitting the assist torque from the assist sprocket 62 to the chain 64.

Having thus described a specific preferred embodiment of the present invention, it should be noted that the present invention is not limited to the above preferred embodiment, but various design changes may be made without departing from the scope of the present invention as defined by the appended claims.

Effect of the Invention :

As apparent from the above description, the invention as defined in claim 1 exerts an effect that even if the first and second magnetic rings are misaligned with each other, a correct phase difference and a pedal depression force can be detected only by adding third and fourth magnetic sensors located about 180° apart from the first and second magnetic sensors with respect to the first and second magnetic rings, respectively. Furthermore, the detection can be realized by simple and inexpensive means.

According to the invention as defined in claim 2 or 4, a pedal depression force is obtained by averaging phase differences detected at two different positions about 180° apart from each other with respect to the first and second magnetic rings. Accordingly, even if the first and second magnetic rings are misaligned with each other, a correct phase difference can be obtained and a correct pedal depression force can be detected.

The present invention as defined in claim 3 or 4 exerts an effect that even if the initial phase difference between a pair of rotating members for detecting a pedal depression force is large, the phase difference between the rotating members during running of the bicycle can be accurately detected and the pedal depression force can be accurately detected. Accordingly, it is possible to provide an inexpensive pedal depression force detecting mechanism without requiring a high accuracy of mounting of the rotating members.

Object: To make it possible to accurately detect a pedal depression force even if a pair of rotating members for detecting the pedal depression force are misaligned with each other.

Constitution: In a pedal depression force detecting device for a bicycle designed to transmit a depression force applied to a pedal through an elastic member to a sprocket, first and second magnetic rings 141 and 142 each having a plurality of N poles and S poles alternately arranged are fixed to the pedal and the sprocket, respectively. A first pair of sensors 151a and 151a' for detecting the magnetic poles of the first magnetic ring 141 are located about 180° apart from each other, and a second pair of sensors 152a and 152a' for detecting the magnetic poles of the second magnetic ring 142 are located about 180° apart from each other. A phase difference between the first and second magnetic rings 141 and 142 is obtained by averaging phase differences obtained by the first and second pairs of sensors. With this configuration, the phase difference between the first and second magnetic rings 141 and 142 can be correctly obtained and the pedal depression force can be accurately detected irrespective of misalignment between the first and second magnetic rings 141 and 142.

EXPLANATION OF THE INDIVIDUAL STEPS S1 - S17 IN FIG. 12:

S1: COMPUTE A VEHICLE SPEED
S2: VEHICLE SPEED ≥ VS ?
S3: READ OUTPUTS FROM FIRST SENSORS
S4: CALCULATE A DETECTION PATTERN BY FIRST SENSORS
S5: READ OUTPUTS FROM SECOND SENSORS
S6: CALCULATE A DETECTION PATTERN BY SECOND SENSORS
S7: CALCULATE A PHASE DIFFERENCE (DIGITAL) BETWEEN FIRST
AND SECOND MAGNETIC RINGS
S8: COMPUTE AN INPUT TORQUE
S9: DECIDE A MOTOR CONTROL QUANTITY (DUTY)
S10: OUTPUT THE MOTOR CONTROL QUANTITY (DUTY)
S11: IS AN OUTPUT FROM NO. 1 FIRST SENSOR HIGH ?
S12: START TIMER COUNTING
S13: IS AN OUTPUT FROM NO. 1 SECOND SENSOR HIGH ?
S14: STORE A TIMER COUNT VALUE (t)
S15: IS AN OUTPUT FROM NO. 1 FIRST SENSOR HIGH AGAIN ?
S16: STORE A TIMER COUNT VALUE (T) AND RESET THE TIMER
S17: CALCULATE t/T (ANALOG)

EXPLANATION OF THE INDIVIDUAL STEPS S1, S2, S21 - S28 IN FIG. 20:

S21: HAVE INITIAL DEVIATIONS BEEN DETECTED ?
S22: DETECT INITIAL DEVIATIONS t0 AND t0'
S23: IS MEMORY SW ON ?
S24: STORE THE INITIAL DEVIATIONS t0 AND t0'
S1: COMPUTE A VEHICLE SPEED
S2: VEHICLE SPEED ≥ VS ?
S25: DETECT A PHASE DIFFERENCE t2 BY SENSORS 151a AND 152a
S26: DETECT A PHASE DIFFERENCE t3 BY SENSORS 151a' AND 152a'
S27: DETECT A PERIOD T BY SENSOR 151a OR 151a'
S28: CALCULATE A PHASE CHANGE ANGLE B FROM EQ. (2)

EXPLANATION OF THE INDIVIDUAL STEPS S1, S2, S21 - S24, S31, S32, S37 - S40 IN FIG. 22:

S21: HAVE INITIAL DEVIATIONS BEEN DETECTED ?
S22: DETECT INITIAL DEVIATIONS t0 AND t0'
S23: IS MEMORY SW ON ?
S24: STORE THE INITIAL DEVIATIONS t0 AND t0'
S1: COMPUTE A VEHICLE SPEED
S2: VEHICLE SPEED ≥ VS ?

S31: DETECT A PHASE DIFFERENCE t11 BY SENSORS 151a AND 152a
S32: DETECT A PHASE DIFFERENCE t11' BY SENSORS 151a' AND 152a'
S37: CALCULATE A PHASE CHANGE ANGLE B FROM EQ. (4)
S38: CALCULATE A PHASE CHANGE ANGLE B FROM EQ. (5)
S39: CALCULATE A PHASE CHANGE ANGLE B FROM EQ. (6)
S40: CALCULATE A PHASE CHANGE ANGLE B FROM EQ. (7)

**Claims**

1. A pedal depression force detecting device for a bicycle designed to transmit a depression force applied to a pedal (37R, 37L) through an elastic member (57) to a sprocket (61), comprising:

   first and second rotating rings (141, 142) fixed to said pedal (37R, 37L) and said sprocket (61), respectively, each of said first and second rotating rings (141, 142) having a plurality of detection elements (143N, 143S, 147N, 147S) arranged in a rotating direction at given intervals; and
   first and second sensors (151a, 152a) fixedly located in opposed relationship to said first and second rotating rings (141, 142), respectively, for detecting said detection elements (143N, 143S, 147N, 147S),
   **characterized in that** the improvement furthermore comprises:

   third and fourth sensors (151a', 152a') fixedly located about 180° apart from said first and second sensors (151 a, 152a) with respect to said first and second rotating rings (141, 142), respectively, for detecting said detection elements (143N, 143S, 147N, 147S);
   said depression force applied to said pedal (37R, 37L) being detected according to a first phase difference obtained by said first and second sensors (151a, 152a) and a second phase difference obtained by said third and fourth sensors (151a', 152a').

2. A pedal depression force detecting method for a bicycle designed to transmit a depression force applied to a pedal (37R, 37L) through an elastic member (57) to a sprocket (61), comprising the step of:

   detecting a first phase difference (t11) between first and second rotating magnetic rings (141, 142) fixed to said pedal (37R, 37L) and said sprocket (61), respectively, each of said first and second rotating magnetic rings (141, 142) having a plurality of magnetic elements (143N, 143S, 147N, 147S) arranged in a rotating direction at given intervals,
   **characterized in that** the improvement furthermore comprises the steps of:

   detecting a second phase difference (t11') between said first and second rotating magnetic rings (141, 142) at a position angularly spaced about 180° apart from a position of detection of said first phase difference (t11) with respect to said first and second rotating magnetic rings (141, 142);
   obtaining an average (B) of said first and second phase differences (t11, t11'); and
   obtaining said depression force applied to said pedal (37R, 37L) by using said average (B).

3. A pedal depression force detecting method for a bicycle according to claim 2, comprising the steps of:

   comparing said phase difference (t11, t11') between said first and second rotating magnetic rings (141, 142) at two positions angularly spaced about 180° apart from each other with respect to said first and second rotating magnetic rings (141, 142) with a preliminarily detected initial deviation (t0, t0') between said first and second rotating rings (141, 142);
   correcting said phase difference (t11, t11') when said phase difference (t11, t11') is smaller than said initial deviation (t0, t0'); and
   obtaining said depression force applied to said pedal (37R, 37L) by using said phase difference (t11, t11') corrected.

4. A pedal depression force detecting method according to claim 2 or 3, wherein said average (B) is an arithmetic mean.

**Patentansprüche**

1. Eine Pedaldruckkrafterfassungseinrichtung für ein Fahrrad, welches dafür ausgebildet ist, eine auf ein Pedal (37R, 37L) ausgeübte Druckkraft durch ein elastisches Element (57) zu einem Kettenrad (61) zu übertragen, umfassend:

   einen ersten und einen zweiten Drehring (141, 142), welche jeweils an dem Pedal (37R, 37L) und dem Kettenrad (61) angebracht sind, wobei jeder von dem ersten und dem zweiten Drehring (141, 142) eine Mehrzahl von Erfassungselementen (143N, 143S, 147N, 147S) aufweist, welche in vorgegebenen Intervallen in einer Drehrichtung angeordnet sind; und
   erste und zweite Sensoren (151a, 152a), welche jeweils fest in gegensätzlicher Beziehung zu dem ersten und dem zweiten Drehring (141, 142) angeordnet sind, um die Erfassungselemente (143N, 143S, 147N, 147S) zu erfassen,
   **dadurch gekennzeichnet, dass** die Verbesserung ferner umfasst:

   dritte und vierte Sensoren (151a', 152a'), welche jeweils etwa 180° entfernt von den ersten und zweiten Sensoren (151 a, 152a) bezüglich des ersten und des zweiten Drehrings (141, 142) fest angeordnet sind, um die Erfassungselemente (143N, 143S, 147N, 147S) zu erfassen;
   wobei die auf das Pedal (37R, 37L) ausgeübte Druckkraft gemäß einer ersten Phasendifferenz, welche durch die ersten und zweiten Sensoren (151a, 152a) erhalten wird, und einer zweiten Phasendifferenz, welche durch die dritten und vierten Sensoren (151a', 152a') erhalten wird, erfasst wird.

2. Pedaldruckkrafterfassungsverfahren für ein Fahrrad, welches dafür ausgebildet ist, eine auf ein Pedal (37R, 37L) ausgeübte Druckkraft durch ein elastisches Element (57) zu einem Kettenrad (61) zu übertragen, umfassen die Schritte:

   Erfassen einer ersten Phasendifferenz (t11) zwischen einem ersten und einem zweiten Magnetdrehring (141, 142), welche jeweils an dem Pedal (37R, 37L) und dem Kettenrad (61) angebracht sind, wobei jeder von dem ersten und dem zweiten Magnetdrehring (141, 142) eine Mehrzahl von magnetischen Elementen (143N, 143S, 147N, 147S) umfasst, welche in vorgegebenen Intervallen in einer Drehrichtung angeordnet sind,
   **dadurch gekennzeichnet, dass** die Verbesserung ferner die Schritte umfasst:

   Erfassen einer zweiten Phasendifferenz (t11') zwischen dem ersten und dem zweiten Magnetdrehring (141, 142) an einer Position, welche in einem Winkelabstand von etwa 180° entfernt von einer Position zur Erfassung der ersten Phasendifferenz (t11) bezüglich des ersten und des zweiten Magnetdrehrings (141, 142) angeordnet ist;
   Erhalt eines Mittelwerts (B) der ersten und der zweiten Phasendifferenz (t11, t11'); und
   Erhalt der auf das Pedal (37R, 37L) ausgeübten Druckkraft unter Verwendung des Mittelwerts (B).

3. Pedaldruckkrafterfassungsverfahren für ein Fahrrad gemäß Anspruch 2, umfassend die Schritte:

   Vergleichen der Phasendifferenz (t11, t11') zwischen dem ersten und dem zweiten Magnetdrehring (141, 142) an zwei Positionen, welche in einem Winkelabstand von etwa 180° entfernt voneinander bezüglich des ersten und des zweiten Magnetdrehrings (141, 142) angeordnet sind, mit einer vorläufig erfassten Anfangsabweichung (t0, t0') zwischen dem ersten und dem zweiten Drehring (141, 142);
   Korrigieren der Phasendifferenz (t11, t11'), wenn die Phasendifferenz (t11, t11') kleiner als die Anfangsabweichung (t0, t0') ist; und
   Erhalt der auf das Pedal (37R, 37L) ausgeübten Druckkraft unter Verwendung der korrigierten Phasendifferenz (t11, t11').

4. Pedaldruckkrafterfassungsverfahren gemäß Anspruch 2 oder 3, wobei der Mittelwert (B) ein arithmetisches Mittel ist.


**Revendications**

1. Dispositif de détection de force d'appui sur une pédale destiné à une bicyclette conçu de manière à transmettre une force d'appui appliquée à une pédale (37R, 37L) par l'intermédiaire d'un élément élastique (57) à un plateau denté (61) comprenant :

une première et une seconde couronne rotative (141, 142) respectivement fixées sur ladite pédale (37R, 37L) et sur ledit plateau denté (61) chacune de ladite première et de ladite seconde bague rotative (141, 142) comprenant une pluralité d'éléments de détection (143N, 143S, 147N, 147S) aménagés dans une direction de rotation à intervalles donnés ; et

un premier et un second capteur (151a, 152a) respectivement disposés de manière fixe dans une relation opposée à ladite première et à ladite seconde couronne rotative (141, 142) afin de détecter lesdits éléments de détection (143N, 143S, 147N, 147S),

**caractérisé en ce que** l'amélioration comprend en outre :

un troisième et un quatrième capteur (151a', 152a') situés séparément de manière fixe à environ 180° dudit premier et dudit second capteur (151a, 152a) par rapport à ladite première et à ladite seconde couronne rotative, respectivement, afin de détecter lesdits éléments de détection (143N, 143S, 147N, 147S);
ladite force d'appui appliquée à ladite pédale (37R, 37L) étant détectée en fonction d'une première différence de phase obtenue par ledit premier et ledit second capteur (151a, 152a) et une seconde différence de phase obtenue par ledit troisième et ledit quatrième capteur (151a', 152a').

2.  Procédé de détection de force d'appui sur une pédale destiné à une bicyclette destiné à transmettre une force d'appui qui s'applique sur une pédale (37R, 37L) par l'intermédiaire d'un élément élastique (57) à un plateau denté (61), comprenant les étapes de :

détection d'une première différence de phase (t11) entre une première et une seconde couronne magnétique rotative (141, 142) fixées sur ladite pédale (37R, 37L) et ledit plateau denté (61), respectivement, chacune de ladite première et de ladite seconde couronne magnétique rotative (141, 142) comprenant une pluralité d'éléments magnétiques (143N, 143S, 147N, 147S) aménagés dans la direction de la rotation à intervalles donnés,

**caractérisé en ce que** l'amélioration comprend en outre les étapes de :

détection d'une seconde différence de phase (t11') entre ladite première et ladite seconde couronne magnétique rotative (141, 142) dans une position angulaire séparée d'environ 180° d'une position de détection de ladite première différence de phase (t11) par rapport à ladite première et à ladite seconde couronne magnétique rotative (141, 142) ;
obtention d'une moyenne (B) de ladite première et de ladite seconde différence de phase (t11, t11') ; et
obtention de ladite force d'appui appliquée sur ladite pédale (37R, 37L) en utilisant ladite moyenne (B).

3.  Procédé de détection de force d'appui sur une pédale destiné à une bicyclette selon la revendication 2, comprenant les étapes de :

comparaison de ladite différence de phase (t11, t11') entre ladite première et ladite seconde couronne magnétique rotative (141, 142) à deux positions angulaires séparées l'une de l'autre d'environ 180° par rapport à ladite première et à ladite seconde couronne magnétique rotative (141, 142) avec une déviation initiale détectée au préalable (t0, t0') entre ladite première et ladite seconde couronne rotative (141, 142) ;
correction de ladite différence de phase (t11, t11') lorsque ladite différence de phase (t11, t11') est plus petite que ladite déviation initiale (t0, t0') ; et
obtention de ladite force d'appui appliquée sur ladite pédale (37R, 37L) en utilisant ladite différence de phase (t11, t11') corrigée.

4.  Procédé de détection de force d'appui sur une pédale selon la revendication 2 ou la revendication 3, dans lequel ladite moyenne (B) est un moyen arithmétique.

Fig. 1

Fig. 2

EP 0 941 918 B1

Fig. 3

Fig. 4

Fig. 5

Fig. 6

Fig. 7

Fig. 8

Fig. 9

EP 0 941 918 B1

# Fig. 10

Fig. 11

FIRST SENSORS

DETECTION PATTERNS
(HEX NOTATION)

| | ST1 | ST2 | ST3 | ST4 | ST5 | ST6 | ST7 | ST8 |
|---|---|---|---|---|---|---|---|---|
| | 0F | 0E | 0C | 08 | 00 | 01 | 03 | 07 |

EP 0 941 918 B1

Fig. 12

Fig. 13

FIRST SENSORS

No.1

No.2

No.3

No.4

SECOND SENSORS

No.1

No.2

No.3

No.4

T 1                    T 2

Fig. 14

(a)   NO. 1

FIRST SENSOR

(b)   NO. 1

SECOND SENSOR

*Fig. 15*

(a)

142 IS DELAYED
IN PHASE FROM 141

(b)

141 AND 142 ARE IN PHASE

(c)

142 IS ADVANCED
IN PHASE FROM 141

(d)

141 AND 142 ARE IN PHASE

*Fig. 16*

(a) 151a

(b) 152a
TORQUE = 0

(c) 152a
TORQUE APPLIED

EP 0 941 918 B1

Fig. 17

33

Fig. 18

(a)

141
141c
151a, 152a
C
151a', 152a'
142c — 142

(b)

141
151a', 152a'
151a, 152a
a
142c
C — 142

(c)

142c — 142
142
151a, 152a
a
C
151a', 152a'
141c
141

(d)

142
151a', 152a'
151a, 152a
a
142c
C
141c — 141

Fig. 19

(a) 151a
    151a'
    N    S    N    S
    ◄——————— T ———————►

(b) 152a
    152a'
    t0

TORQUE = 0

(c) 152a    DELAYED
    TORQUE APPLIED    Δt
    ◄— t2 —►
    ◄—— t1 ——►

(d) 152a
    TORQUE APPLIED    Δt
    ◄——— t3 ———► ADVANCED

Fig. 20

EP 0 941 918 B1

Fig. 21

(a) 1 5 1 a

T

(b) 1 5 2 a
TORQUE = 0

t 0

(c) 1 5 2 a
SMALL TORQUE

t 11

(d) 1 5 2 a
LARGE TORQUE

t 12

t 13

Fig. 22